(19)

**Europäisches Patentamt**
**European Patent Office**
**Office européen des brevets**

(11) **EP 3 417 523 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(51) Int Cl.:
*H02J 3/06* (2006.01)          *H02J 3/18* (2006.01)
*H02J 3/24* (2006.01)

(21) Anmeldenummer: **17702357.9**

(22) Anmeldetag: **30.01.2017**

(86) Internationale Anmeldenummer:
**PCT/EP2017/051915**

(87) Internationale Veröffentlichungsnummer:
**WO 2017/140479 (24.08.2017 Gazette 2017/34)**

(54) **VERFAHREN ZUM STEUERN EINES REGELTRANSFORMATORS UND ELEKTRISCHE ANLAGE ZUM KOPPELN ZWEIER WECHSELSTROMNETZE**

METHOD FOR CONTROLLING A VARIABLE TRANSFORMER AND ELECTRICAL SYSTEM FOR COUPLING TWO AC NETWORKS

PROCÉDÉ DE COMMANDE D'UN TRANSFORMATEUR DE RÉGULATION ET INSTALLATION ÉLECTRIQUE DE COUPLAGE DE DEUX RÉSEAUX À COURANT ALTERNATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2016 DE 102016102593**

(43) Veröffentlichungstag der Anmeldung:
**26.12.2018 Patentblatt 2018/52**

(73) Patentinhaber: **Maschinenfabrik Reinhausen GmbH**
**93059 Regensburg (DE)**

(72) Erfinder:
• **FENG, Haijun**
  **93128 Regenstauf (DE)**
• **BABIZKI, Alexei**
  **93049 Regensburg (DE)**

(56) Entgegenhaltungen:
**EP-A1- 1 211 775          GB-A- 2 521 414**
**US-A1- 2013 119 950**

• LE FU ET AL: "Phasor measurement application for power system voltage stability monitoring", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20. Juli 2008 (2008-07-20), Seiten 1-8, XP031303877, ISBN: 978-1-4244-1905-0
• BAHADORNEJAD MOMEN ET AL: "Intelligent Control of On-Load Tap Changing Transformer", IEEE TRANSACTIONS ON SMART GRID, IEEE, USA, Bd. 5, Nr. 5, 1. September 2014 (2014-09-01), Seiten 2255-2263, XP011558476, ISSN: 1949-3053, DOI: 10.1109/TSG.2014.2329017 [gefunden am 2014-09-08]
• BARTOSZ BRUSILOWICZ ET AL: "A new method of voltage stability margin estimation based on local measurements", ADVANCED POWER SYSTEM AUTOMATION AND PROTECTION (APAP), 2011 INTERNATIONAL CONFERENCE ON, IEEE, 16. Oktober 2011 (2011-10-16), Seiten 2443-2447, XP032162662, DOI: 10.1109/APAP.2011.6180655 ISBN: 978-1-4244-9622-8
• M.H. HAQUE: "On-line monitoring of maximum permissible loading of a power system within voltage stability limits", IEE PROCEEDINGS: GENERATION, TRANSMISSION AND DISTRIBUTION., Bd. 150, Nr. 1, 1. Januar 2003 (2003-01-01), Seite 107, XP055357654, GB ISSN: 1350-2360, DOI: 10.1049/ip-gtd:20020682

EP 3 417 523 B1

**EP 3 417 523 B1**

**Beschreibung**

Die Erfindung betrifft ein Verfahren zum Steuern eines Regeltransformators und eine elektrische Anlage zum Koppeln zweier Wechselstromnetze.

Die Abschaltung großer Kraftwerke und gleichzeitige Errichtung von immer mehr Erneuerbare-Energie-Anlagen und der damit verbundene wachsende Anteil an schwankender Stromeinspeisung verschlechtert die Netzstabilität immer mehr und erhöht die Gefahr von Blackouts. Dies stellt sowohl die Verteilnetzbetreiber als auch die Übertragungsnetzbetreiber vor große Herausforderungen. Derartige, durch schwankende Stromeinspeisung verursachten Instabilitäten in einem Verteilnetz können in das Übertragungsnetz über den diese Netze koppelnden Regeltransformator eindringen und sind daher möglichst zu vermeiden.

EP 1 134 867 B1 beschreibt eine Systemschutzzentrale für ein elektrisches Energieversorgungsnetz sowie ein Verfahren zur Bewertung der Stabilität eines elektrischen Energieversorgungsnetzes, wobei das Netz mehrere Umspannwerke, Busse und Leitungen und eine Systemschutzzentrale umfasst. Dieses bekannte Verfahren umfasst die folgenden Schritte:

- Senden von Umspannwerkdaten bezüglich des Zustandes von Schaltern mindestens eines Umspannwerks zu der Systemschutzzentrale;
- Messen von Zeigerdaten für Spannungen und Ströme an mehreren Orten des Netzes;
- Senden der Zeigerdaten zu der Systemschutzzentrale,
- die Systemschutzzentrale bestimmt aus den Zeigerdaten und den Umspannwerkdaten mindestens einen Leistungs-, Spannungs- oder Impedanzstabilitätsreservewert als ein Maß der Stabilität des Versorgungsnetzes;
- die Systemschutzzentrale bestimmt einen oder mehrere Steuerbefehle;
- die Systemschutzzentrale sendet die Steuerbefehle zu dem mindestens einen Umspannwerk;
- das Umspannwerk führt die Steuerbefehle aus;
- die Systemschutzzentrale bestimmt Netzzustandsinformationen;
- die Systemschutzzentrale sendet die Netzzustandsinformationen zu einem Energiesteuerungssystem;
- das Energiesteuerungssystem steuert die Stromerzeugung und den Stromfluss in dem Netz gemäß den Netzzustandsinformationen.

Bei diesem bekannten Verfahren sammelt das Energiesteuerungssystem die Umspannwerkdaten von mehreren Umspannwerken. Auf Basis dieser gesammelten Daten steuert das Energiesteuerungssystem die Stromerzeugung und den Stromfluss in dem Netz, indem es Steuerbefehle an die Umspannwerke sendet. Bei diesem bekannten Verfahren empfängt die Systemschutzzentrale Zeigerdaten von Zeigermesseinheiten, die sich an Speiseleitungen der mehreren Umspannwerke und/oder an Verzweigungspunkten entlang von Übertragungsleitungen befinden. Bei diesem bekannten Verfahren werden die Zeigerdaten von Zeigermesseinheiten gesammelt, die über ein großes geometrisches Gebiet von hunderten Kilometern verteilt sind. Bei diesem bekannten Verfahren erfolgt die Bestimmung der Stabilität des Versorgungsnetzes gemäß einem Verfahren, das aus VU, K. ET AL: »USE OF LOCAL MEASUREMENTS TO ESTIMATE VOLTAGE-STABILITY MARGIN« (POWER INDUSTRY COMPUTER APPLICATIONS (PICA), IEEE, 12.-16- Mai 1997) bekannt ist.

VU, K. ET AL: »USE OF LOCAL MEASUREMENTS TO ESTIMATE VOLTAGE-STABILITY MARGIN« (POWER INDUSTRY COMPUTER APPLICATIONS (PICA), IEEE, 12.-16- Mai 1997) beschreibt ein Verfahren, das die Stabilität eines Übertragungsnetzes bestimmt. Dieses bekannte Verfahren verwendet für eine Lastschiene (»load bus«) des Übertragungsnetzes ein Lastmodell und behandelt den Rest des Übertragungsnetzes als ein Thevenin-Äquivalent. Bei diesem bekannten Verfahren definiert das Lastmodell die Lastimpedanz durch $\underline{Z}_{app} = \underline{u(t)}/\underline{i(t)}$ und wird als Stabilitätskriterium $|\underline{Z}_{app}| > \underline{Z}_{Thev}|$ verwendet, worin $\underline{Z}_{Thev}$ die Thévenin-Impedanz ist.

LE FU ET AL: "Phasor measurement application for power system voltage stability monitoring" (POWER AND ENERGY SOCIETY GENERAL MEETING - CONVERSION AND DE-LIVERY OF ELECTRICAL ENERGY IN THE 21ST CENTURY, IEEE, 20.06.2008, Seiten 1-8) beschreibt ein Verfahren zur Überwachung der Spannungsstabilität in elektrischen Energienetzen. Anhand von Netzdaten, die durch PMUs (Phasor Measurement) erzeugt werden, sowie Informationen zu Schalthandlungen von Stufenschaltern (OLTC) wird ein Index für die Spannungsstabilität in ermittelt.

BAHADORNED MOMEN ET AL: "Intelligent Control of On-Load Tap Chaning Transformer", (IEEE TRANSACTIONS ON SMART GRID, IEEE, USA, Bd. 5, Nr. 5, 1. September 2014, Seiten 2255 - 2263) beschreibt ein Verfahren zur Regelung eines Stufenschalters, das auf der Änderung des primärseitigen Stroms, sowie der primärseitigen Spannung, die bei einer Stufenschalteroperation auftritt, basiert. Die auftretenden Änderungen in Strom und Spannung werden genutzt, um entsprechende Thévenin-Äquivalente des Versorgungsnetzes zu bestimmen.

BARTOSZ BRUSILOWICZ ET AL.: "A new method of voltage stabilty margin estimation based on local measurements", (ADVANCED POWER SYSTEM AUTOMATION AND PROTECTION (APAP), 2011 INTERNATIONAL CONFERENCE ON, IEEE, 16.10.2011, Seiten 2443-2447) beschreibt ein Verfahren zur Überwachung der lokalen Spannungsstabilität eines Energieversorgungssystems. Zur Einschätzung der Spannungsstabilität werden, Thévenin-Äquivalente genutzt. Zur Bestimmung der Thévenin-Äquivalente werden Schaltvorgänge des Stufenschalters herangezogen.

M.H. HAQUE: "On-line monitoring of maximum permissible loading of a power system within voltage stability limits", IEE PROCEEDINGS: GENERATION, TRANSMISSION AND DISTRIBUTION, Bd. 150, Nr 1, 01.01.2013, Seite 107-112) beschreibt ein Verfahren zur Bestimmung der maximal zulässigen Last sowie der Spannungsstabilitätsmarge eines Energieversorgungssystems. Zur Bestimmung der genannten Parameter werden Informationen zum aktuellen Betriebszustand genutzt.

GB 2 521 414 A beschreibt ein Verfahren sowie eine Vorrichtung zur Einspeisung oder Entnahme von Leistung in ein elektrisches Netz. Zur Modellierung des elektrischen Netzes wird das Thevenin-Theorem genutzt. Basierend auf den so modellierten Thevenin-Äquivalenten wird ein optimierter Strom bestimmt der ins Netz eingespeist oder dem Netz entnommen wird, um Verluste im Netz zu minimieren und optimalen Leistungsfluss im Netz zu gewährleisten.

EP 1 211 775 A1 beschreibt ein Verfahren sowie eine Vorrichtung zur Bewertung der Stabilität eines elektrischen Netzes, wobei mindestens ein Paar von Messwerten genutzt wird. Jeder Messwert umfasst dabei einen ersten und einen zweiten Messpunkt, die Messpunkte enthalten je einen Spannungs- und einen Stromzeiger. Anhand der Messwerte wird ein Thévenin-Äquivalent der Impedanz und ein Stabilitätswert ermittelt. Weiterhin wird ein Gültigkeitsindikator ermittelt, der davon abhängt, ob eine Abweichung zwischen den beiden Messpunkten sowie eine Abweichung zwischen zwei korrespondierenden Lastimpedanzen besteht. Basierend auf dem Gültigkeitsindikator wird ein Qualitätsindikator abgeleitet, der dem Thévenin-Äquivalent der Impedanz und dem aktuellen Stabilitätswert zugeordnet wird.

US 2013 0 119 950 A1 beschreibt eine Vorrichtung zur Kompensation einer Übertragungsleitung, umfassend einen Spartransformator und eine Kompensationseinrichtung.

Vor diesem Hintergrund schlägt die Erfindung die Gegenstände der unabhängigen Ansprüche vor. Vorteilhafte Ausführungsformen der Erfindung sind in den abhängigen Ansprüchen beschrieben.

Im Folgenden entspricht eine Formulierung der Art "A ist an B angebunden" einer Formulierung der Art "A ist mit B verbunden", umfasst eine Formulierung der Art "A ist mit B verbunden" die Bedeutungen "A ist direkt mit B elektrisch leitend verbunden" und "A ist indirekt, also über C, mit B elektrisch leitend verbunden", und hat eine Formulierung der Art "A ist an B angeschlossen" die Bedeutung "A ist direkt mit B elektrisch leitend verbunden".

Die Erfindung schlägt gemäß einem ersten Aspekt ein Verfahren zum Steuern eines Regeltransformators mit einstellbarem Übersetzungsverhältnis vor, der zwischen ein erstes und zweites Wechselstromnetz geschaltet ist, wobei

- die Zeigerdaten von Zeigern des ersten und/oder zweiten Wechselstromnetzes ermittelt werden;
- für das erste Wechselstromnetz ein Ersatzschaltbild mit Ersatzschaltbildparametern ermittelt oder gewählt wird;
- für das zweite Wechselstromnetz ein Lastmodell mit Lastmodellparametern ermittelt oder gewählt wird;
- die Ersatzschaltbildparameter und die Lastmodellparameter aus den Zeigerdaten ermittelt werden;
- wenn auf ein gewünschtes Übersetzungsverhältnis umgeschaltet werden soll,

  • für das gewünschte Übersetzungsverhältnis ein Arbeitspunkt des zweiten Wechselstromnetzes vorhergesagt wird;
  • für den vorhergesagten Arbeitspunkt ein Stabilitätskriterium in dem zweiten Wechselstromnetz und/oder für das zweite Wechselstromnetz überprüft wird;
  • falls das Stabilitätskriterium erfüllt ist, auf das gewünschte Übersetzungsverhältnis umgeschaltet wird, sonst nicht.

Auf ein gewünschtes Übersetzungsverhältnis soll üblicherweise dann umgeschaltet werden, wenn beispielsweise ein vorgegebenes Spannungsband verletzt wird.

Die Erfindung schlägt gemäß einem zweiten Aspekt eine elektrische Anlage zum Koppeln zweier Wechselstromnetze vor, umfassend

- einen Regeltransformator mit einstellbarem Übersetzungsverhältnis, der zwischen ein erstes und zweites Wechselstromnetz geschaltet ist oder geschaltet werden kann;
- eine Messeinrichtung, die Wechselstromgrößen, insbesondere Wechselstromgrößen des ersten und/oder zweiten Wechselstromnetzes, erfassen kann, wobei insbesondere die Wechselstromgrößen für Zeigerdaten, insbesondere die Zeigerdaten des ersten und/oder zweiten Wechselstromnetzes, charakteristisch sind und/oder aus denen Zeigerdaten, insbesondere die Zeigerdaten des ersten und/oder zweiten Wechselstromnetzes ermittelt werden können;
- eine Steuereinrichtung, die an die Messeinrichtung und zum Steuern des Regeltransformators an den Regeltransformator gekoppelt ist;
  wobei die Steuereinrichtung derart ausgebildet ist, dass sie
- aus den Wechselstromgrößen die Zeigerdaten von Zeigern des ersten und/oder zweiten Wechselstromnetzes ermittelt;

- für das erste Wechselstromnetz ein Ersatzschaltbild mit Ersatzschaltbildparametern ermittelt oder wählt;
- für das zweite Wechselstromnetz ein Lastmodell mit Lastmodellparametern ermittelt oder wählt;
- die Ersatzschaltbildparameter und die Lastmodellparameter aus den Zeigerdaten ermittelt;
- die Zeigerdaten überwacht und je nach Überwachungsergebnis ein Umschaltsignal, das ein gewünschtes Übersetzungsverhältnis enthält, mithilfe der Zeigerdaten vorbereitet;
- wenn das Umschaltsignal vorbereitet ist,

  • für das gewünschte Übersetzungsverhältnis einen Arbeitspunkt des zweiten Wechselstromnetzes vorhersagt;
  • für den vorhergesagten Arbeitspunkt ein Stabilitätskriterium in dem zweiten Wechselstromnetz und/oder für das zweite Wechselstromnetz überprüft;
  • falls das Stabilitätskriterium erfüllt ist, das Umschaltsignal an den Regeltransformator sendet, sonst nicht.

Die Erfindung ermöglicht, dass Netzprobleme frühzeitig erkannt werden, ohne dass großer Mehraufwand betrieben werden muss, der vor Allem mit den sogenannten »abgesetzten Sensoren« verbunden ist, die gemäß EP 1 134 867 B1 von dem bekannten Verfahren und der bekannten Systemschutzzentrale verwendet und dort als Zeigermesseinheiten bezeichnet werden. Denn die Erfindung begnügt sich mit den sogenannten »lokalen Sensoren«, die an einem Regeltransformator sowieso bereits vorhanden sind, da sie für dessen Regelung verwendet werden, und beispielhaft einfache und preisgünstige Analog-Digital-Umsetzer sind.

Außerdem ermöglicht die Erfindung eine autarke Reaktion des Regeltransformators zur Vermeidung oder zumindest Verringerung und Verzögerung eines möglichen Stabilitätsproblems, ohne dass Daten an eine entfernte Steuereinrichtung in einer Leitwarte gesendet und Steuersignale von dieser empfangen werden müssen. Denn die Erfindung verhindert, dass der Regeltransformator auf ein anderes Übersetzungsverhältnis umschaltet und somit die Spannung ändert, wenn dadurch das zweite Wechselstromnetz in einen instabilen Zustand geraten würde.

Die Zeigerdaten repräsentieren bekanntlich die in der komplexen Wechselstromrechnung verwendeten Zeiger für Spannung und Stromstärke und können beispielsweise auf bekannte Art und Weise durch zeitaufgelöste Messung von Spannung und Stromstärke ermittelt werden. Aus den Zeigerdaten können bekanntlich alle benötigten elektrischen Größen, wie beispielsweise Spannung, Stromstärke, Phasenverschiebungswinkel, Leistungsfaktor, Wirkfaktor, Scheinleistung, Wirkleistung, Blindleistung, Impedanz, Scheinwiderstand, Wirkwiderstand oder Blindwiderstand, errechnet werden. Die Zeigerdaten werden vorteilhaft in entsprechenden Zeigerdatensätzen zusammengefasst.

Vorzugsweise werden die Zeigerdaten am Regeltransformator ermittelt und/oder die für die Zeigerdaten erforderlichen Wechselstromgrößen am Regeltransformator erfasst.

Die erwähnte zeitaufgelöste Messung von Spannung und Stromstärke erfolgt bevorzugt auf bekannte Art und Weise an den Eingangsklemmen des Regeltransformators, an denen er mit dem ersten Wechselstromnetz verbunden werden kann, und/oder an seinen Ausgangsklemmen, an denen er mit dem zweiten Wechselstromnetz verbunden werden kann, und/oder an Leitungen, die an diese Klemmen angebunden oder angeschlossen sind.

Jedes Wechselstromnetz kann nach Bedarf auf beliebige Art und Weise ausgebildet sein. So kann beispielsweise das erste Wechselstromnetz ein Übertragungsnetz sein, das von einem Übertragungsnetzbetreiber auf Hochspannungsebene bei beispielhaft 60 kV bis 150 kV oder 110 kV betrieben wird, und das zweite Wechselstromnetz ein Verteilnetz, das von einem Verteilnetzbetreiber auf Mittelspannungsebene bei beispielhaft 1 kV bis 35 kV oder 20 kV bis 25 kV oder 10 kV betrieben wird. Oder es kann beispielsweise das erste Wechselstromnetz ein Übertragungsnetz sein, das von einem Übertragungsnetzbetreiber auf Höchstspannungsebene bei beispielhaft 230 kV oder 400 kV oder 735 kV oder 765 kV oder 750 kV oder 500 kV betrieben wird, und das zweite Wechselstromnetz ein Übertragungsnetz, das von einem Übertragungsnetzbetreiber auf Hochspannungsebene bei beispielhaft 60 kV bis 150 kV oder 110 kV betrieben wird. Oder es kann beispielsweise das erste Wechselstromnetz ein Verteilnetz sein, das von einem Verteilnetzbetreiber auf Mittelspannungsebene bei beispielhaft 1 kV bis 35 kV oder 20 kV bis 25 kV oder 10 kV betrieben wird, und das zweite Wechselstromnetz ein Ortsnetz oder Stadtnetz sein, das von einem Verteilnetzbetreiber auf Niederspannungsebene bei beispielhaft 230 V oder 400 V betrieben wird.

Das Ersatzschaltbild kann nach Bedarf auf beliebige Art und Weise gebildet werden. Bei einer Ausführungsform ist spezifiziert, dass

- das Ersatzschaltbild gemäß dem Thevenin-Theorem oder dem Norton-Theorem gebildet wird.

Die Ersatzschaltbildparameter können nach Bedarf auf beliebige Art und Weise ermittelt werden.
Bei einer Ausführungsform ist spezifiziert, dass

- die Ersatzschaltbildparameter dadurch ermittelt werden, dass

  • für eine vorbestimmte Anzahl M von Zeitpunkten die Zeigerdaten, und gegebenenfalls die Übersetzungsverhältnisse, ermittelt und gesammelt werden;
- eine Zielfunktion unter Verwendung der gesammelten Zeigerdaten, und gegebenenfalls der Übersetzungsverhältnisse, ermittelt oder gewählt wird;
- die Ersatzschaltbildparameter durch Minimieren der Zielfunktion berechnet werden.

Vorzugsweise werden die für die Ermittlung der Zielfunktion benötigten Zeigerdaten nur dann gesammelt, wenn sich die Last um einen vorgegebenen Betrag geändert hat.

Die Zielfunktion kann nach Bedarf auf beliebige Art und Weise ermittelt und/oder gewählt werden und/oder ausgebildet sein.

Bei einer Ausführungsform ist spezifiziert, dass

- für das Thevenin-Theorem als Zielfunktion

$$ L = \sum_{k=1}^{M} \left\{ \left( \frac{E_{Th}}{\ddot{u}} \right)^2 - \left[ u_k^2 + 2Z(P_k \cos \vartheta + Q_k \sin \vartheta) + (Zi_k)^2 \right] \right\}^2 $$

mit den Nebenbedingungen

$$ EU \le E_{Th} \le EO \quad , \text{ mit } EU < 1 \text{ und } EO > 1 $$

$$ Z > 0 $$

$$ TU \le \tan \vartheta \le TO $$

gewählt wird;

- ü das Übersetzungsverhältnis ist, das bevorzugt konstant ist oder als konstant angenommen wird;
- ZDk ein Zeigerdatensatz ist, der die zu einem k-ten Zeitpunkt (mit k = 1 ...M) gesammelten Zeigerdaten enthält;
- $P_k$ die aus dem Zeigerdatensatz ZDk berechnete Wirkleistung ist;
- $Q_k$ die aus dem Zeigerdatensatz ZDk berechnete Blindleistung ist;
- $i_k$ die aus dem Zeigerdatensatz ZDk berechnete Stromstärke ist;
- $u_k$ die aus dem Zeigerdatensatz ZDk berechnete Spannung ist;
- $E_{Th}$ die Thevenin-Spannung ist;
- eine Gesamtimpedanz, die das erste Wechselstromnetz (11) und den Regeltransformator (13) beschreibt, durch

$$ \underline{Z} = Z \cdot e^{j\vartheta} = \frac{\underline{Z}_{Th} + \underline{Z}_{Trf}}{\ddot{u}^2} $$

definiert wird oder ist;
- $Z_{Th}$ die Thévenin-Impedanz ist;
- $Z_{Trf}$ die Impedanz des Regeltransformators (13) ist;
- Z der Scheinwiderstand der Gesamtimpedanz ist;
- $\vartheta$ der Phasenwinkel der Gesamtimpedanz ist;
- Z, $\vartheta$ und $E_{Th}$ die Ersatzschaltbildparameter sind;
- EU und EO vorbestimmte untere und obere Grenzwerte sind;
- TU und TO vorbestimmte untere und obere Grenzwerte sind.

Bei einer Ausführungsform ist spezifiziert, dass

- EU, insbesondere nach Bedarf, auf 0,6 oder 0,7 oder 0,8 oder 0,9 gesetzt wird; und/oder

- EO, insbesondere nach Bedarf, auf 1,1 oder 1,15 oder 1,2 oder 1,25 oder 1,3 oder 1,4 gesetzt wird; und/oder
- TU, insbesondere nach Bedarf, auf einen Wert kleiner als 10 oder auf 9 oder 8,5 oder 8 oder 7,5 oder 7 oder 6,5 oder 6 oder 5,5 oder 5 oder 4,5 oder 4 oder 3,5 oder 3 oder 2,5 oder 2 gesetzt wird; und/oder
- TO, insbesondere nach Bedarf, auf einen Wert größer als 12 oder auf 13 oder 13,5 oder 14 oder 14,5 oder 15 oder 15,5 oder 16 oder 16,5 oder 17 oder 18 oder 19 oder 20 gesetzt wird.

Bei einer Ausführungsform ist spezifiziert, dass

- das Lastmodell das zweite Wechselstromnetz als eine spannungsabhängige Gesamtlast modelliert; und/oder
- das Lastmodell die Wirkleistung und die Blindleistung des zweiten Wechselstromnetzes in Abhängigkeit von der angelegten Spannung beschreibt.

Im Unterschied hierzu lehrt VU, K. ET AL: »USE OF LOCAL MEASUREMENTS TO ESTIMATE VOLTAGE-STABILITY MARGIN« (POWER INDUSTRY COMPUTER APPLICATIONS (PICA), IEEE, 12.-16- Mai 1997), dass das Lastmodell die Leistung der Lastschiene unabhängig von der angelegten Spannung beschreibt.
Das Lastmodell kann nach Bedarf auf beliebige Art und Weise modelliert werden und/oder ausgebildet sein.
Bei einer Ausführungsform ist spezifiziert, dass

- das Lastmodell dadurch modelliert wird, dass

  • für eine vorbestimmte Anzahl N von Umschaltungen auf ein gewünschtes Übersetzungsverhältnis die Zeigerdaten vor und nach jeder dieser Umschaltungen ermittelt und gesammelt werden;
  • eine erste Zielfunktion für die Wirkleistung und eine zweite Zielfunktion für die Blindleistung unter Verwendung der gesammelten Zeigerdaten ermittelt oder gewählt werden;
  • die Lastmodellparameter durch Minimieren der Zielfunktionen berechnet werden.

Das Lastmodell kann nach Bedarf auf beliebige Art und Weise ermittelt und/oder gewählt werden und/oder ausgebildet sein.
Bei einer Ausführungsform ist spezifiziert, dass

- das Lastmodell ein exponentielles Lastmodell oder ein polynomisches Lastmodell oder ein kombiniertes Lastmodell ist.

Jede der beiden Zielfunktion kann nach Bedarf auf beliebige Art und Weise ermittelt und/oder gewählt werden und/oder ausgebildet sein.
Bei einer Ausführungsform ist spezifiziert, dass

- für das exponentielle Lastmodell als erste Zielfunktion

$$J = \sum_{k=1}^{N}\left[\frac{P_{1,k}}{P_{2,k}} - \left(\frac{u_{1,k}}{u_{2,k}}\right)^{x}\right]^{2}$$

und als zweite Zielfunktion

$$K = \sum_{k=1}^{N}\left[\frac{Q_{1,k}}{Q_{2,k}} - \left(\frac{u_{1,k}}{u_{2,k}}\right)^{y}\right]^{2}$$

mit den Nebenbedingungen

$$0 \le x \le 2$$

$$0 \le y \le YO$$

gewählt wird;

- $P_{1,k}$ die aus den gesammelten Zeigerdaten berechnete Wirkleistung vor der k-ten Umschaltung ist;
- $P_{2,k}$ die aus den gesammelten Zeigerdaten berechnete Wirkleistung nach der k-ten Umschaltung ist;
- $Q_{1,k}$ die aus den gesammelten Zeigerdaten berechnete Blindleistung vor der k-ten Umschaltung ist;
- $Q_{2,k}$ die aus den gesammelten Zeigerdaten berechnete Blindleistung nach der k-ten Umschaltung ist;
- $u_{1,k}$ die aus den gesammelten Zeigerdaten berechnete Spannung vor der k-ten Umschaltung ist;
- $u_{2,k}$ die aus den gesammelten Zeigerdaten berechnete Spannung im nach der k-ten Umschaltung ist;
- x, y die Lastmodellparameter sind;
- YO ein vorbestimmter oberer Grenzwert ist.

Bei einer Ausführungsform ist spezifiziert, dass

- für das polynomische Lastmodell als erste Zielfunktion

$$J = \sum_{k=1}^{N} \left\{ \left[ u_{1,k}^2 - \frac{P_{1,k}}{P_{2,k}} u_{2,k}^2 \right] x_1 + \left[ u_{1,k} - \frac{P_{1,k}}{P_{2,k}} u_{2,k} \right] x_2 + \left[ 1 - \frac{P_{1,k}}{P_{2,k}} \right] x_3 \right\}^2$$

und als zweite Zielfunktion

$$K = \sum_{k=1}^{N} \left\{ \left[ u_{1,k}^2 - \frac{Q_{1,k}}{Q_{2,k}} u_{2,k}^2 \right] y_1 + \left[ u_{1,k} - \frac{Q_{1,k}}{Q_{2,k}} u_{2,k} \right] y_2 + \left[ 1 - \frac{Q_{1,k}}{Q_{2,k}} \right] y_3 \right\}^2$$

mit den Nebenbedingungen

$$0 \le x_i \le 1 \text{ und } 0 \le y_i \le 1 \ , \ \text{mit i = 1...3}$$

$$x_1 + x_2 + x_3 = y_1 + y_2 + y_3 = 1$$

gewählt wird;
- $P_{1,k}$ die aus den gesammelten Zeigerdaten berechnete Wirkleistung vor der k-ten Umschaltung ist;
- $P_{2,k}$ die aus den gesammelten Zeigerdaten berechnete Wirkleistung nach der k-ten Umschaltung ist;
- $Q_{1,k}$ die aus den gesammelten Zeigerdaten berechnete Blindleistung vor der k-ten Umschaltung ist;
- $Q_{2,k}$ die aus den gesammelten Zeigerdaten berechnete Blindleistung nach der k-ten Umschaltung ist;
- $u_{1,k}$ die aus den gesammelten Zeigerdaten berechnete Spannung vor der k-ten Umschaltung ist;
- $u_{2,k}$ die aus den gesammelten Zeigerdaten berechnete Spannung im nach der k-ten Umschaltung ist;
- $x_i, x_j, y_i, y_j$ die Lastmodellparameter sind.

Bei einer Ausführungsform ist spezifiziert, dass

- für das kombinierte Lastmodell als erste Zielfunktion

$$J = \sum_{k=1}^{N} \left\{ \left[ u_{1,k}^{x_4} - \frac{P_{1,k}}{P_{2,k}} u_{2,k}^{x_4} \right] x_1 + \left[ u_{1,k}^{x_5} - \frac{P_{1,k}}{P_{2,k}} u_{2,k}^{x_5} \right] x_2 + \left[ u_{1,k}^{x_6} - \frac{P_{1,k}}{P_{2,k}} u_{2,k}^{x_6} \right] x_3 \right\}^2$$

und als zweite Zielfunktion

$$K = \sum_{k=1}^{N} \left\{ \left[ u_{1,k}^{y_4} - \frac{Q_{1,k}}{Q_{2,k}} u_{2,k}^{y_4} \right] y_1 + \left[ u_{1,k}^{y_5} - \frac{Q_{1,k}}{Q_{2,k}} u_{2,k}^{y_5} \right] y_2 + \left[ u_{1,k}^{y_6} - \frac{Q_{1,k}}{Q_{2,k}} u_{2,k}^{y_6} \right] y_3 \right\}^2$$

mit den Nebenbedingungen

$$0 \le x_i \le 1 \ \text{ und } \ 0 \le y_i \le 1 \ \text{ , mit i = 1...3}$$

$$0 \le x_j \ \text{ und } \ 0 \le y_j \ \text{ , mit j = 4...6}$$

$$x_1 + x_2 + x_3 = y_1 + y_2 + y_3 = 1$$

gewählt wird;

- $P_{1,k}$ die aus den gesammelten Zeigerdaten berechnete Wirkleistung vor der k-ten Umschaltung ist;
- $P_{2,k}$ die aus den gesammelten Zeigerdaten berechnete Wirkleistung nach der k-ten Umschaltung ist;
- $Q_{1,k}$ die aus den gesammelten Zeigerdaten berechnete Blindleistung vor der k-ten Umschaltung ist;
- $Q_{2,k}$ die aus den gesammelten Zeigerdaten berechnete Blindleistung nach der k-ten Umschaltung ist;
- $u_{1,k}$ die aus den gesammelten Zeigerdaten berechnete Spannung vor der k-ten Umschaltung ist;
- $u_{2,k}$ die aus den gesammelten Zeigerdaten berechnete Spannung im nach der k-ten Umschaltung ist;
- $x_i$, $x_j$, $y_i$, $y_j$ die Lastmodellparameter sind.

Bei einer Ausführungsform ist spezifiziert, dass

- YO, insbesondere nach Bedarf, auf einen Wert größer als 3 oder auf 4 oder 4,5 oder 5 oder 5,5 oder 6 oder 6,5 oder 7 oder 7,5 oder 8 oder 8,5 oder 9 oder 9,5 oder 10 oder 11 gesetzt wird.

Der Arbeitspunkt kann nach Bedarf auf beliebige Art und Weise vorhergesagt werden.
Bei einer Ausführungsform ist spezifiziert, dass

- der Arbeitspunkt mithilfe einer Lastflussberechnung vorhergesagt wird.

Das Stabilitätskriterium kann nach Bedarf auf beliebige Art und Weise ermittelt und/oder gewählt und/oder überprüft werden und/oder ausgebildet sein.
Bei einer Ausführungsform ist spezifiziert, dass

- das Stabilitätskriterium mithilfe einer Lastflussberechnung überprüft wird.

Bei einer Ausführungsform ist spezifiziert, dass

- das Stabilitätskriterium dadurch überprüft wird, dass

  • für den aktuellen Zustand des zweiten Wechselstromnetzes eine Stabilitätsreserve ΔP ermittelt wird;
  • für den vorhergesagten Arbeitspunkt überprüft wird, ob

$$P_G - P' > \Delta P$$

gilt;

- $P_G$ die Grenz-Wirkleistung der P-U-Kennlinie ist;
- P' die Wirkleistung des vorhergesagten Arbeitspunktes ist.

Die Grenz-Wirkleistung ist die größte Wirkleistung der P-U-Kennlinie und liegt am Grenzpunkt der P-U-Kennlinie, bei dem das zweite Wechselstromnetz überlastet ist.

Bei dieser Überprüfung wird die Wirkleistung P ausgewertet. Alternativ oder zusätzlich kann das Stabilitätskriterium beispielsweise auch durch analoge Auswertung der Blindleistung überprüft werden.
Die Stabilitätsreserve kann nach Bedarf auf beliebige Art und Weise ermittelt und/oder gewählt werden und/oder ausgebildet sein.
Bei einer Ausführungsform ist spezifiziert, dass

- als Stabilitätsreserve

$$\Delta P = P_G - P_H$$

gewählt wird;
- $P_H$ die Hopf-Wirkleistung der P-U-Kennlinie ist.

Die Hopf-Wirkleistung liegt am Hopf-Punkt der P-U-Kennlinie, bei dem das zweite Wechselstromnetz instabil wird.
Diese Stabilitätsreserve hängt somit vom der Wirkleistung P ab. Alternativ oder zusätzlich kann sie aber auch von der Blindleistung Q und/oder der Scheinleistung S und/oder dem Leistungsfaktor oder Wirkfaktor abhängen.
Bei einer Ausführungsform ist spezifiziert, dass

- das Stabilitätskriterium dadurch überprüft wird, dass

  • für den aktuellen Zustand (A) des zweiten Wechselstromnetzes (12) eine Stabilitätsreserve ∆P ermittelt wird;
  • für den vorhergesagten Arbeitspunkt (A') überprüft wird, ob

$$P_G - P' > \Delta P$$

gilt;

- $P_G$ die Grenz-Wirkleistung der P-U-Kennlinie ist;
- P' die Wirkleistung des vorhergesagten Arbeitspunktes (A') ist;
- die Stabilitätsreserve mithilfe einer Lastflussberechnung ermittelt wird; und/oder
- das Stabilitätskriterium in Abhängigkeit von der ersten Ableitung U'(P) und/oder von dem Betrag der ersten Ableitung |U'(P)| und/oder von der zweiten Ableitung U"(P) und/oder von dem Betrag der zweiten Ableitung |U"(P)| der P-U-Kennlinie überprüft wird.

Bei einer Ausführungsform ist spezifiziert, dass, insbesondere vor dem Ermitteln der Lastmodellparameter und/oder nach jedem Umschalten,

- ein Zustandsänderungskriterium für den Zustand des ersten Wechselstromnetzes überprüft wird;
- falls das Zustandsänderungskriterium erfüllt ist, das Ermitteln der Ersatzschaltbildparameter wiederholt wird oder erneut erfolgt.

Vorzugsweise werden für dieses erneute Ermitteln der Ersatzschaltbildparameter nur diejenigen Zeigerdaten verwendet, die nach der Zustandsänderung gemessen worden sind.
Das Zustandsänderungskriterium kann nach Bedarf auf beliebige Art und Weise ermittelt und/oder gewählt und/oder überprüft werden und/oder ausgebildet sein.
Bei einer Ausführungsform ist spezifiziert, dass

- eine Gesamtimpedanz, die das erste Wechselstromnetz und den Regeltransformator beschreibt, durch

$$\underline{Z} = R + jX = \frac{\underline{Z}_{Th} + \underline{Z}_{Trf}}{\ddot{u}^2}$$

definiert wird oder ist;

- $\underline{Z}_{Th}$ die Thévenin-Impedanz ist;
- $\underline{Z}_{Trf}$ die Impedanz des Regeltransformators ist;
- R der Wirkwiderstand der Gesamtimpedanz ist;
- X der Blindwiderstand der Gesamtimpedanz ist;
- ZDi ein Zeigerdatensatz ist, der die zu einem i-ten Zeitpunkt gesammelten Zeigerdaten enthält;
- das Zustandsänderungskriterium dadurch überprüft wird, dass

  - aus dem jüngsten Zeigerdatensatz ZD1 und den drei vorangegangenen Zeigerdatensätzen ZD2, ZD3, ZD4 jeweils die Spannung $u_i$, die Stromstärke $i_i$, die Wirkleistung $P_i$ und die Blindleistung $Q_i$ berechnet werden, mit i = 1...4;
  - überprüft wird, ob wenigstens eine der folgenden Bedingungen

$$E_1{}^2 - 4D_1F_1 \geq 0$$

$$\Delta X < XO$$

  nicht gilt;

- die folgenden Definitionen verwendet werden:

$$A_1 = (u_1^2 - u_2^2)(i_1^2 - i_3^2) - (u_1^2 - u_3^2)(i_1^2 - i_2^2)$$

$$A_2 = (u_2^2 - u_3^2)(i_2^2 - i_4^2) - (u_2^2 - u_4^2)(i_2^2 - i_3^2)$$

$$B_1 = 2(P_1 - P_2)(i_1^2 - i_3^2) - 2(P_1 - P_3)(i_1^2 - i_2^2)$$

$$B_2 = 2(P_2 - P_3)(i_2^2 - i_4^2) - 2(P_2 - P_4)(i_2^2 - i_3^2)$$

$$C_1 = 2(Q_1 - Q_2)(i_1^2 - i_3^2) - 2(Q_1 - Q_3)(i_1^2 - i_2^2)$$

$$C_2 = 2(Q_2 - Q_3)(i_2^2 - i_4^2) - 2(Q_2 - Q_4)(i_2^2 - i_3^2)$$

$$D_1 = \frac{B_1^2 + C_1^2}{B_1^2}(i_1^2 - i_2^2)$$

$$D_2 = \frac{B_2^2 + C_2^2}{B_2^2}(i_2^2 - i_3^2)$$

$$E_1 = \frac{2A_1C_1}{B_1^2}(i_1^2 - i_2^2) - 2\frac{C_1}{B_1}(P_1 - P_2) + 2(Q_1 - Q_2)$$

$$E_2 = \frac{2A_2C_2}{B_2^2}(i_2^2 - i_3^2) - 2\frac{C_2}{B_2}(P_2 - P_3) + 2(Q_2 - Q_3)$$

$$F_1 = (u_1^2 - u_2^2) + \frac{A_1^2}{B_1^2}(i_1^2 - i_2^2) - 2\frac{A_1}{B_1}(P_1 - P_2)$$

$$F_2 = (u_2^2 - u_3^2) + \frac{A_2^2}{B_2^2}(i_2^2 - i_3^2) - 2\frac{A_2}{B_2}(P_2 - P_3)$$

- $X_1$ der Blindwiderstand der Gesamtimpedanz für die Zeigerdatensätze ZD1...ZD3 ist und aus

$$D_1 X_1^2 + E_1 X_1 + F_1 = 0 \quad \text{und} \quad X_1 > 0$$

errechnet wird;
- $X_2$ der Blindwiderstand der Gesamtimpedanz für die Zeigerdatensätze ZD2...ZD4 ist und aus

$$D_2 X_2^2 + E_2 X_2 + F_2 = 0 \quad \text{und} \quad X_2 > 0$$

errechnet wird;
- die relative Änderung des Blindwiderstands durch

$$\Delta X = \left| \frac{(X_1 - X_2)}{X_2} \right|$$

definiert wird oder ist;
- XO ein vorbestimmter oberer Grenzwert ist.

Bei einer Ausführungsform ist spezifiziert, dass

- XO, insbesondere nach Bedarf, auf einen Wert größer als 15% und/oder kleiner als 60% oder auf 15% oder 18% oder 20% oder 22% oder 25% oder 30% oder 35% oder 40% oder 45% oder 50% oder 55% oder 60% gesetzt wird.

Bei einer Ausführungsform ist spezifiziert, dass

- falls das Stabilitätskriterium nicht erfüllt ist, ermittelt wird, wie viel kapazitive oder induktive Blindleistung erforderlich ist, um das Stabilitätskriterium zu erfüllen, und eine entsprechend dimensionierte Blindleistungskompensationsanlage, die mit dem zweiten Wechselstromnetz verbunden ist, entsprechend angesteuert wird; und/oder
- die erforderliche kapazitive oder induktive Blindleistung mithilfe einer Lastflussberechnung oder auf andere Art und Weise ermittelt wird; und/oder
- die Blindleistungskompensationsanlage wenigstens eine Kondensatorbank und/oder wenigstens eine Spule umfasst.

Bei einer Ausführungsform ist spezifiziert, dass

- wenigstens eine der Lastflussberechnungen gemäß dem Backward-Forward-Sweep-Verfahren oder dem Newton-Raphson-Verfahren oder auf andere Art und Weise erfolgt; und/oder
- wenigstens eine der Zielfunktionen mithilfe der Methode der kleinsten Quadrate oder der Methode der gewichteten kleinsten Quadrate oder auf andere Art und Weise ermittelt wird; und/oder
- wenigstens eine der Zielfunktionen mithilfe der Levenberg-Marquard-Methode oder auf andere Art und Weise minimiert wird;
- die Wechselstromgrößen in einem vorbestimmten Takt erfasst und/oder die Zeigerdatensätze in einem vorbestimmten Takt ermittelt werden; und/oder
- für jeden Takt dessen Taktzeit, insbesondere nach Bedarf, auf einen Wert größer als 10 ms oder 100 ms oder 120 ms oder 150 ms und/oder auf einen Wert kleiner als 20 s oder auf 10 ms oder 20 ms oder 50 ms oder 100 ms oder 120 ms oder 150 ms oder 200 ms oder 500 ms oder 1 s oder 2 s oder 5 s oder 10 s oder 15 s oder 20 s gesetzt wird; und/oder

- das erste Wechselstromnetz zeitlich stabiler als das zweite Wechselstromnetz ist; und/oder
- das erste Wechselstromnetz auf einer ersten Spannungsebene und das zweite Wechselstromnetz auf einer zweiten Spannungsebene liegt, die unter der ersten Spannungsebene liegt; und/oder
- die Zeigerdaten dadurch ermittelt werden, dass die Zeitverläufe von Stromstärke und Spannung an den primärseitigen und/oder sekundärseitigen Klemmen oder Anschlüssen des Regeltransformators gemessen werden.

Bei einer Ausführungsform der Anlage ist spezifiziert, dass

- die Anlage derart ausgebildet ist, dass sie wenigstens eines der vorgeschlagenen Verfahren und/oder wenigstens eine der Ausführungsformen des Verfahrens ausführt oder ausführen kann; und/oder
- die Steuereinrichtung derart ausgebildet ist, dass sie wenigstens eines der vorgeschlagenen Verfahren und/oder wenigstens eine der Ausführungsformen des Verfahrens ausführt oder ausführen kann.

Mit jeder der vorgeschlagenen Anlagen kann beispielhaft eines der vorgeschlagenen Verfahren durchgeführt werden. Jede der vorgeschlagenen Anlagen kann beispielhaft derart ausgebildet sein und/oder dazu dienen und/oder dafür geeignet sein, dass sie eines der vorgeschlagenen Verfahren ausführt und/oder ausführen kann.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in

FIG. 1     eine bevorzugte Ausführungsform einer elektrischen Anlage zum Koppeln zweier Wechselstromnetze, die einen Regeltransformator mit einstellbarem Übersetzungsverhältnis umfasst und eine bevorzugte Ausführungsform eines Verfahrens zum Steuern des Regeltransformators ausführt;

FIG. 2     ein Ablaufdiagramm des Verfahrens der FIG. 1;

FIG. 3     das P-U-Kennlinienfeld für das zweite Wechselstromnetz der FIG. 1.

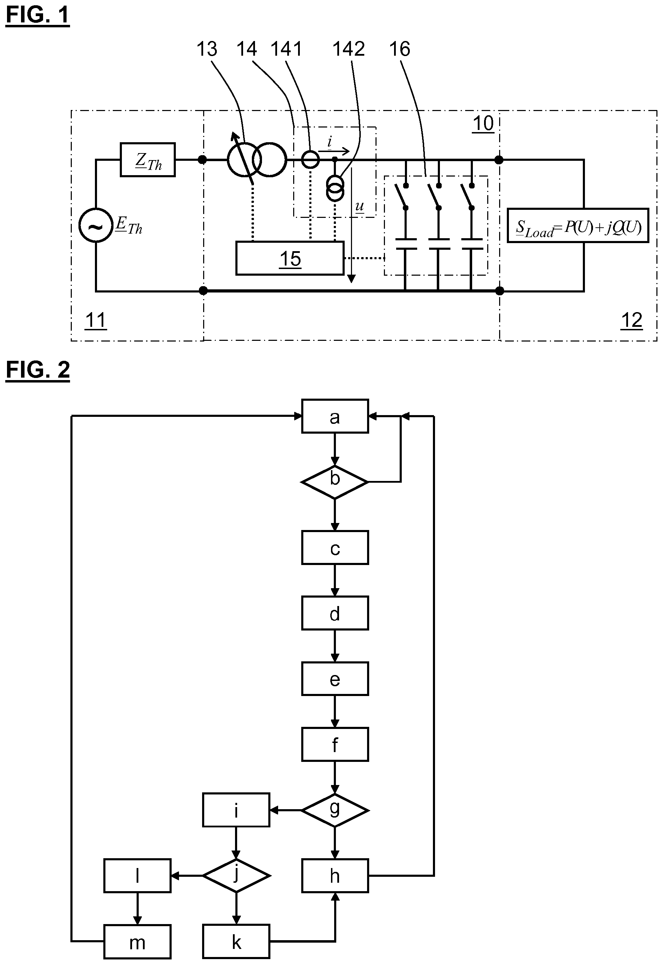

In FIG. 1 ist eine bevorzugte Ausführungsform einer elektrischen Anlage 10 schematisch dargestellt, die ein erstes und zweites Wechselstromnetz 11, 12 miteinander koppelt. Die Anlage 10 umfasst einen Regeltransformator 13 mit einstellbarem Übersetzungsverhältnis ü, der zwischen die Wechselstromnetze 11, 12 geschaltet ist, eine Messeinrichtung 14, die beispielhaft einen Stromsensor 141 und einen Spannungssensor 142 umfasst, eine Steuereinrichtung 15, die an die Messeinrichtung 14 und den Regeltransformator 13 gekoppelt ist, und eine Blindleistungskompensationsanlage 16, die zwischen den Regeltransformator 13 und das zweite Wechselstromnetz 12 geschaltet und an die Steuereinrichtung 15 gekoppelt ist.

Die Sensoren 141, 142 sind an eine Leitung gekoppelt, die an eine der Ausgangsklemmen des Regeltransformators 13 auf dessen Sekundärseite angeschlossen ist, die mit dem zweiten Wechselstromnetz 12 verbunden ist. Der Stromsensor 141 erfasst den zeitlichen Verlauf der Stromstärke i, und der Spannungssensor 142 erfasst den zeitlichen Verlauf der Spannung u. Folglich erfasst die Messeinrichtung 14 mittels der Sensoren 141, 142 Wechselstromgrößen des zweiten Wechselstromnetzes 12, nämlich i und u, die für die Zeigerdaten der beiden Wechselstromnetze 11, 12 charakteristisch sind und aus denen diese Zeigerdaten ermittelt werden können. Es ist aber auch möglich, dass wenigstens einer der Sensoren 141, 142 an eine Leitung gekoppelt ist, die an eine der Eingangsklemmen des Regeltransformators 13 auf dessen Primärseite angeschlossen ist, die mit dem erste Wechselstromnetz 11 verbunden ist.

Die Blindleistungskompensationsanlage 16 umfasst drei unterschiedlich dimensionierte Kondensatorbänke, die nach Bedarf jeweils über einen Leistungsschalter dem zweiten Wechselstromnetz 12 zugeschaltet und von diesem getrennt werden können.

Die Anlage 10 ist derart ausgebildet, dass sie eine bevorzugte Ausführungsform eines Verfahrens zum Steuern des Regeltransformators 13 und/oder zum Beeinflussen oder Steuern der beiden Wechselstromnetze 11, 12 ausführen kann.

In FIG. 2 ist die bevorzugte Ausführungsform des Verfahrens schematisch dargestellt.

In einem Schritt a ermittelt die Steuereinrichtung 15 die Zeigerdaten aus den von der Messeinrichtung 14 erfassten Wechselstromgrößen i, u.

In einem Schritt b überwacht die Steuereinrichtung 15 die Zeigerdaten und bereitet je nach Überwachungsergebnis mithilfe der Zeigerdaten ein Umschaltsignal für den Regeltransformator 13 vor, das ein gewünschtes Übersetzungsverhältnis enthält, das einer gewünschten Spannung entspricht. Falls die Steuereinrichtung 15 das Umschaltsignal nicht vorbereitet, dann springt sie zu Schritt a, sonst führt sie Schritt c aus.

In Schritt c ermittelt die Steuereinrichtung 15 für das erste Wechselstromnetz 11 ein Ersatzschaltbild mit Ersatzschaltbildparametern.

In einem Schritt d ermittelt die Steuereinrichtung 15 für das zweite Wechselstromnetz ein Lastmodell mit Lastmodellparametern.

In einem Schritt e ermittelt die Steuereinrichtung 15 aus den Zeigerdaten die Ersatzschaltbildparameter und die Lastmodellparameter.

In einem Schritt f sagt die Steuereinrichtung 15 für das gewünschte Übersetzungsverhältnis einen Arbeitspunkt A' des zweiten Wechselstromnetzes 12 vorher.

In einem Schritt g überprüft die Steuereinrichtung 15 für den vorhergesagten Arbeitspunkt A' ein Stabilitätskriterium in dem zweiten Wechselstromnetz 12. Falls das Stabilitätskriterium erfüllt ist, dann führt die Steuereinrichtung 15 Schritt h aus, sonst führt sie Schritt i aus.

In Schritt h sendet die Steuereinrichtung 15 das vorbereitete Umschaltsignal an den Regeltransformator 13 und springt zu Schritt a. Der Regeltransformator 13 schaltet nach Erhalt des Umschaltsignals auf das gewünschte Übersetzungsverhältnis um.

In Schritt i ermittelt die Steuereinrichtung 15, wie viel Blindleistung erforderlich ist, um das Stabilitätskriterium zu erfüllen.

In einem Schritt j überprüft die Steuereinrichtung 15, ob die Blindleistungskompensationsanlage 16 die erforderliche Blindleistung liefern kann. Falls ja, dann führt sie Schritt k aus, sonst führt sie Schritt l aus.

In Schritt k sendet die Steuereinrichtung 15 ein Abschaltsignal, das eine gewünschte Blindleistung, die von der erforderlichen Blindleistung abhängt und die Blindleistungskompensationsanlage 16 liefern kann, enthält, an die Blindleistungskompensationsanlage 16. Die Blindleistungskompensationsanlage 16 trennt nach Erhalt des Abschaltsignals die für die gewünschte Blindleistung erforderlichen Kondensatorbänke von dem zweiten Wechselstromnetz 12 ab. Hierdurch wird die Einspeisung kapazitiver Blindleistung verringert und sinkt die Spannung U am zweiten Wechselstromnetz 12. Diese verringerte Einspeisung kapazitiver Blindleistung entspricht einer erhöhten Einspeisung induktiver Blindleistung, und der Wirkfaktor coscp des zweiten Wechselstromnetzes 12 wird in Richtung »induktiv« verschoben. Anschließend ermittelt die Steuereinrichtung 15 wegen der gesunkenen Spannung U erneut die Zeigerdaten und bereitet mithilfe dieser Zeigerdaten ein neues Umschaltsignal für den Regeltransformator 13 vor, das ein neues gewünschtes Übersetzungsverhältnis enthält, das der gewünschten Spannung entspricht. Dann springt sie zu Schritt h.

In Schritt l sendet die Steuereinrichtung 15 ein Abschaltsignal, das die maximale Blindleistung, die die Blindleistungskompensationsanlage 16 liefern kann, enthält, an die Blindleistungskompensationsanlage 16 und springt zu Schritt h. Die Blindleistungskompensationsanlage 16 trennt nach Erhalt des Abschaltsignals alle Kondensatorbänke von dem zweiten Wechselstromnetz 12 ab.

In einem Schritt m erzeugt die Steuereinrichtung 15 ein Warnsignal und springt zu Schritt a.

Bevor die Steuereinrichtung 15 Schritt e erneut ausführt, überprüft sie ein Zustandsänderungskriterium für den Zustand des ersten Wechselstromnetzes 11. Falls das Zustandsänderungskriterium erfüllt ist, dann wiederholt sie das Ermitteln der Ersatzschaltbildparameter, sonst übernimmt sie die vorhandenen Ersatzschaltbildparameter.

Für dieses Überprüfen des Zustandsänderungskriterium definiert die Steuereinrichtung 15 zunächst eine Gesamtimpedanz, die das erste Wechselstromnetz 11 und den Regeltransformator 13 beschreibt, durch

$$\underline{Z} = R + jX = \frac{\underline{Z}_{Th} + \underline{Z}_{Trf}}{\ddot{u}^2} \quad ,$$

worin:

$\underline{Z}_{Th}$ die Thévenin-Impedanz ist,
$\underline{Z}_{Trf}$ die Impedanz des Regeltransformators 13 ist,
R der Wirkwiderstand der Gesamtimpedanz ist,
X der Blindwiderstand der Gesamtimpedanz ist,

Dann überprüft die Steuereinrichtung 15 das Zustandsänderungskriterium, indem sie

- aus dem jüngsten Zeigerdatensatz ZD1 und den drei vorangegangenen Zeigerdatensätzen ZD2, ZD3, ZD4 jeweils die Spannung $u_i$, die Stromstärke $i_i$, die Wirkleistung $P_i$ und die Blindleistung $Q_i$ berechnet (mit i = 1...4);
- überprüft, ob wenigstens eine der folgenden Bedingungen

$$E_1{}^2 - 4D_1F_1 \geq 0$$

$$\Delta X < XO$$

nicht gilt;

- die folgenden Definitionen verwendet:

$$A_1 = (u_1^2 - u_2^2)(i_1^2 - i_3^2) - (u_1^2 - u_3^2)(i_1^2 - i_2^2)$$

$$A_2 = (u_2^2 - u_3^2)(i_2^2 - i_4^2) - (u_2^2 - u_4^2)(i_2^2 - i_3^2)$$

$$B_1 = 2(P_1 - P_2)(i_1^2 - i_3^2) - 2(P_1 - P_3)(i_1^2 - i_2^2)$$

$$B_2 = 2(P_2 - P_3)(i_2^2 - i_4^2) - 2(P_2 - P_4)(i_2^2 - i_3^2)$$

$$C_1 = 2(Q_1 - Q_2)(i_1^2 - i_3^2) - 2(Q_1 - Q_3)(i_1^2 - i_2^2)$$

$$C_2 = 2(Q_2 - Q_3)(i_2^2 - i_4^2) - 2(Q_2 - Q_4)(i_2^2 - i_3^2)$$

$$D_1 = \frac{B_1^2 + C_1^2}{B_1^2}(i_1^2 - i_2^2)$$

$$D_2 = \frac{B_2^2 + C_2^2}{B_2^2}(i_2^2 - i_3^2)$$

$$E_1 = \frac{2A_1C_1}{B_1^2}(i_1^2 - i_2^2) - 2\frac{C_1}{B_1}(P_1 - P_2) + 2(Q_1 - Q_2)$$

$$E_2 = \frac{2A_2C_2}{B_2^2}(i_2^2 - i_3^2) - 2\frac{C_2}{B_2}(P_2 - P_3) + 2(Q_2 - Q_3)$$

$$F_1 = (u_1^2 - u_2^2) + \frac{A_1^2}{B_1^2}(i_1^2 - i_2^2) - 2\frac{A_1}{B_1}(P_1 - P_2)$$

$$F_2 = (u_2^2 - u_3^2) + \frac{A_2^2}{B_2^2}(i_2^2 - i_3^2) - 2\frac{A_2}{B_2}(P_2 - P_3) \quad,$$

worin:

$X_1$ der Blindwiderstand der Gesamtimpedanz für die Zeigerdatensätze ZD1...ZD3 ist, den sie aus

$$D_1 X_1^2 + E_1 X_1 + F_1 = 0 \quad \text{und} \quad X_1 > 0$$

errechnet,
$X_2$ der Blindwiderstand der Gesamtimpedanz für die Zeigerdatensätze ZD2...ZD4 ist, den sie aus

$$D_2 X_2^2 + E_2 X_2 + F_2 = 0 \quad \text{und} \quad X_2 > 0$$

errechnet,
$\Delta X$ die relative Änderung des Blindwiderstands ist, den sie aus

$$\Delta X = \left| \frac{(X_1 - X_2)}{X_2} \right|$$

errechnet,
XO ein vorbestimmter oberer Grenzwert ist.

In Schritt c ermittelt die Steuereinrichtung 15 das Ersatzschaltbild, indem sie das Ersatzschaltbild gemäß dem Thevenin-Theorem bildet.
In Schritt e ermittelt die Steuereinrichtung 15 die Ersatzschaltbildparameter, indem sie

- ein Übersetzungsverhältnis und für eine vorbestimmte Anzahl M von Zeitpunkten die Zeigerdaten ermittelt und sammelt;
- für das Thevenin-Theorem als Zielfunktion

$$L = \sum_{k=1}^{M} \left\{ \left(\frac{E_{Th}}{\ddot{u}}\right)^2 - \left[u_k^2 + 2Z(P_k \cos\vartheta + Q_k \sin\vartheta) + (Zi_k)^2\right] \right\}^2$$

mit den Nebenbedingungen

$$EU \leq E_{Th} \leq EO \quad, \text{ mit } EU < 1 \text{ und } EO > 1$$

$$Z > 0$$

$$TU \leq \tan\vartheta \leq TO$$

wählt, worin:

ü das Übersetzungsverhältnis ist, das sie als konstant annimmt oder voraussetzt,
ZDk ein Zeigerdatensatz ist, der die zu einem k-ten Zeitpunkt (mit k = 1...M) gesammelten Zeigerdaten enthält,

$P_k$ die aus dem Zeigerdatensatz ZDk berechnete Wirkleistung ist,

$Q_k$ die aus dem Zeigerdatensatz ZDk berechnete Blindleistung ist,

$i_k$ die aus dem Zeigerdatensatz ZDk berechnete Stromstärke ist, deren Größenwert insbesondere im Per-Unit-System angegeben ist,

$u_k$ die aus dem Zeigerdatensatz ZDk berechnete Spannung ist, deren Größenwert insbesondere im Per-Unit-System angegeben ist,

$E_{Th}$ die Thevenin-Spannung ist;

eine Gesamtimpedanz, die das erste Wechselstromnetz (11) und den Regeltransformator (13) beschreibt, durch

$$\underline{Z} = Z \cdot e^{j\vartheta} = \frac{\underline{Z}_{Th} + \underline{Z}_{Trf}}{\ddot{u}^2}$$

definiert wird oder ist;

$\underline{Z}_{Th}$ die Thévenin-Impedanz ist;

$\underline{Z}_{Trf}$ die Impedanz des Regeltransformators (13) ist;

$Z$ der Scheinwiderstand der Gesamtimpedanz ist;

$\vartheta$ der Phasenwinkel der Gesamtimpedanz ist;

$Z$, $\vartheta$ und $E_{Th}$ die Ersatzschaltbildparameter sind,

EU und EO vorbestimmte untere und obere Grenzwerte sind,

TU und TO vorbestimmte untere und obere Grenzwerte sind;

- EU auf 0,8, EO auf 1,2, TU auf 5 und TO auf 20 setzt;
- die Ersatzschaltbildparameter durch Minimieren der Zielfunktion mithilfe der Levenberg-Marquard-Methode berechnet.

In Schritt d ermittelt die Steuereinrichtung 15 das Lastmodell, indem sie ein kombiniertes Lastmodell wählt.

In Schritt e ermittelt die Steuereinrichtung 15 die Lastmodellparameter, indem sie

- für eine vorbestimmte Anzahl N von Umschaltungen auf ein gewünschtes Übersetzungsverhältnis die Zeigerdaten vor und nach jeder dieser Umschaltungen ermittelt und sammelt;
- für das kombinierte Lastmodell als erste Zielfunktion

$$J = \sum_{k=1}^{N} \left\{ \left[ u_{1,k}^{x_4} - \frac{P_{1,k}}{P_{2,k}} u_{2,k}^{x_4} \right] x_1 + \left[ u_{1,k}^{x_5} - \frac{P_{1,k}}{P_{2,k}} u_{2,k}^{x_5} \right] x_2 + \left[ u_{1,k}^{x_6} - \frac{P_{1,k}}{P_{2,k}} u_{2,k}^{x_6} \right] x_3 \right\}^2$$

und als zweite Zielfunktion

$$K = \sum_{k=1}^{N} \left\{ \left[ u_{1,k}^{y_4} - \frac{Q_{1,k}}{Q_{2,k}} u_{2,k}^{y_4} \right] y_1 + \left[ u_{1,k}^{y_5} - \frac{Q_{1,k}}{Q_{2,k}} u_{2,k}^{y_5} \right] y_2 + \left[ u_{1,k}^{y_6} - \frac{Q_{1,k}}{Q_{2,k}} u_{2,k}^{y_6} \right] y_3 \right\}^2$$

mit den Nebenbedingungen

$$0 \leq x_i \leq 1 \text{ und } 0 \leq y_i \leq 1 \text{ , mit i = 1...3}$$

$$0 \leq x_i \text{ und } 0 \leq y_i \text{ , mit j = 4...6}$$

$$x_1 + x_2 + x_3 = y_1 + y_2 + y_3 = 1$$

wählt, worin:

$P_{ik}$ die aus den gesammelten Zeigerdaten berechnete Wirkleistung vor der k-ten Umschaltung ist,
$P_{2,k}$ die aus den gesammelten Zeigerdaten berechnete Wirkleistung nach der k-ten Umschaltung ist,
$Q_{1,k}$ die aus den gesammelten Zeigerdaten berechnete Blindleistung vor der k-ten Umschaltung ist,
$Q_{2,k}$ die aus den gesammelten Zeigerdaten berechnete Blindleistung nach der k-ten Umschaltung ist,
$u_{1,k}$ die aus den gesammelten Zeigerdaten berechnete Spannung vor der k-ten Umschaltung ist, deren Größenwert im Per-Unit-System angegeben ist, $u_{2,k}$ die aus den gesammelten Zeigerdaten berechnete Spannung im nach der k-ten Umschaltung ist, deren Größenwert im Per-Unit-System angegeben ist, $x_i$, $x_j$, $y_i$, $y_j$ die jeweiligen Lastmodellparameter sind,

- die Lastmodellparameter durch Minimieren der Zielfunktionen mithilfe der Levenberg-Marquard-Methode berechnet.

Bei dieser Ausführungsform erfolgt die Ermittlung der Lastmodellparameter erst dann, wenn die vorbestimmte Anzahl N von Umschaltungen erreicht ist und somit genügend Zeigerdaten vorliegen. Vorher führt die Steuereinrichtung 15 diese Ermittlung anhand von vorbestimmten Lastmodellparametern durch.

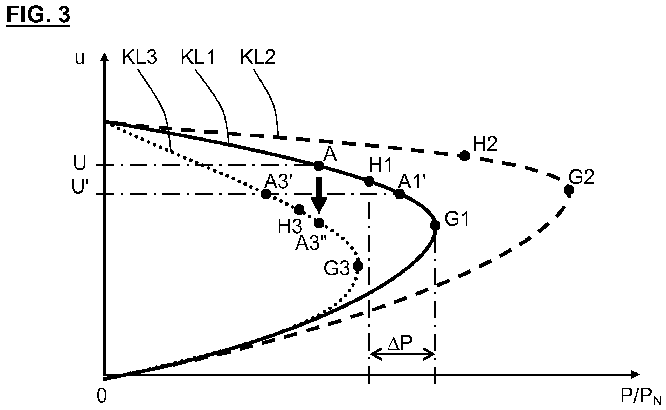

In FIG. 3 ist das P-U-Kennlinienfeld für das zweite Wechselstromnetz 12 abgebildet, das die P-U-Kennlinien für unterschiedliche Wirkfaktoren coscp zusammenfasst. Hier sind lediglich drei Kennlinien gezeigt, nämlich eine erste, durchgezogene Kennlinie KL1 für $\cos\varphi = 1$, eine zweite, gestrichelte Kennlinie KL2 für $\cos\varphi < 1$ bei kapazitiver Last, und eine dritte, gepunktete Kennlinie KL3 für $\cos\varphi < 1$ bei induktiver Last. Jede dieser Kennlinien weist zwei charakteristische Punkte auf, nämlich den Grenzpunkt G1, G2, G3 und den Hopf-Punkt H1, H2, H3. Am Grenzpunkt G liegt die Grenz-Wirkleistung $P_G$, die die größte Wirkleistung der jeweiligen Kennlinie ist, dort ist das zweite Wechselstromnetz 12 überlastet. Am Hopf-Punkt H liegt die Hopf-Wirkleistung $P_H$, bei kleineren Wirkleistungen ist das zweite Wechselstromnetz 12 stabil, bei größeren instabil.

Falls nun der aktuelle Arbeitspunkt A des zweiten Wechselstromnetzes 12 auf der ersten Kennlinie KL1 im stabilen Bereich links von H1 liegt und die Steuereinrichtung 15 eigentlich die entsprechende aktuelle Spannung U am zweiten Wechselstromnetz 12 durch Umschalten des Regeltransformators 13 auf ein gewünschtes Übersetzungsverhältnis so stark auf eine gewünschte Spannung U' verringern müsste, dass der von ihr dementsprechend vorhergesagte Arbeitspunkt A1' im instabilen Bereich rechts von H1 liegen würde, dann wird sie diese Umschaltung zunächst verhindern. Außerdem wird sie dann prüfen, ob die Blindleistungskompensationsanlage 16 ausreichend Blindleistung liefern kann, sodass der hierdurch geänderte Wirkfaktor coscp eine Kennlinie, die hier beispielhaft die dritte Kennlinie KL3 ist, definiert, deren Hopf-Punkt H3 unter der gewünschten Spannung U' liegt. Denn in diesem Fall würde der Arbeitspunkt A zunächst durch das Umschalten der Blindleistungskompensationsanlage 16 gemäß dem Pfeil auf diese dritte Kennlinie KL3 nach A3" wandern. Von dort würde er dann durch Umschalten des Regeltransformators 13 auf ein neues gewünschtes Übersetzungsverhältnis, das der gleichen gewünschten, im Vergleich zur aktuellen Spannung U verringerten Spannung U' entspricht, zu einem neuen Arbeitspunkt A3' wandern, der im stabilen Bereich dieser dritten Kennlinie KL3 links von H3 läge. Falls also diese Überprüfung der Blindleistungskompensationsanlage 16 erfolgreich ist, so wird die Steuereinrichtung 12 die Blindleistungskompensationsanlage 16 entsprechend ansteuern und die Umschaltung des Regeltransformators 13 freigeben, andernfalls wird sie die Umschaltung des Regeltransformators 13 weiterhin verhindern.

Die Steuereinrichtung 15 berechnet dieses Kennlinienfeld mithilfe einer Lastflussberechnung gemäß dem Backward-Forward-Sweep-Verfahren.

In Schritt f sagt die Steuereinrichtung 15 den Arbeitspunkt A' mithilfe der Lastflussberechnung vorher.

In Schritt g überprüft die Steuereinrichtung 15 das Stabilitätskriterium, indem sie

- für den aktuellen Zustand des zweiten Wechselstromnetzes 12 eine Stabilitätsreserve

$$\Delta P = P_G - P_H$$

mithilfe der Lastflussberechnung ermittelt wird;
- für den vorhergesagten Arbeitspunkt A' überprüft, ob

$$P_G - P' > \Delta P$$

gilt, worin:

$P_G$ die Grenz-Wirkleistung der P-U-Kennlinie ist,

P' die Wirkleistung des vorhergesagten Arbeitspunktes A' ist,
$P_H$ die Hopf-Wirkleistung der P-U-Kennlinie ist.

**BEZUGSZEICHEN**

| | |
|---|---|
| 10 | elektrische Anlage |
| 11 | erstes Wechselstromnetz |
| 12 | zweites Wechselstromnetz |
| 13 | Regeltransformator |
| 14 | Messeinrichtung |
| 141/142 | Stromsensor/Spannungssensor von 14 |
| 15 | Steuereinrichtung |
| 16 | Blindleistungskompensationsanlage |
| A | aktueller Arbeitspunkt auf der P-U-Kennlinie |
| A' | vorhergesagter Arbeitspunkt auf der P-U-Kennlinie |
| $E_{Th}$ | Thevenin-Spannung, Ersatzschaltbildparameter |
| G | Grenzpunkt der P-U-Kennlinie |
| H | Hopf-Punkt der P-U-Kennlinie |
| $i_k$ | Stromstärke, berechnet aus ZDk |
| M | Anzahl von Zeitpunkten zur Ermittlung der Zeigerdaten |
| N | Anzahl von Umschaltungen auf ein gewünschtes ü |
| $P_k$ | Wirkleistung, berechnet aus ZDk |
| $P_{1,k}$ | Wirkleistung vor der k-ten Umschaltung |
| $P_{2,k}$ | Wirkleistung nach der k-ten Umschaltung |
| $P_G$ | Grenz-Wirkleistung der P-U-Kennlinie |
| $P_H$ | Hopf-Wirkleistung der P-U-Kennlinie |
| P' | Wirkleistung von A' |
| $\Delta P$ | Stabilitätsreserve |
| $Q_k$ | Blindleistung, berechnet aus ZDk |
| $Q_{1,k}$ | Blindleistung vor der k-ten Umschaltung |
| $Q_{2,k}$ | Blindleistung nach der k-ten Umschaltung |
| R | Wirkwiderstand von $\underline{Z}$ |
| $u_k$ | Spannung, berechnet aus ZDk |
| $u_{1,k}$ | Spannung vor der k-ten Umschaltung |
| $u_{2,k}$ | Spannung nach der k-ten Umschaltung |
| ü | Übersetzungsverhältnis von 13 |
| x, $x_i$, $x_j$ | Lastmodellparameter |
| X | Blindwiderstand von $\underline{Z}$ |
| y, $y_i$, $y_j$ | Lastmodellparameter |
| ZDj | Zeigerdatensatz für einen j-ten Zeitpunkt |
| $\underline{Z}$ | Gesamtimpedanz |
| Z | Scheinwiderstand von $\underline{Z}$, Ersatzschaltbildparameter |
| $\underline{Z}_{Th}$ | Thévenin-Impedanz |
| $\underline{Z}_{Trf}$ | Impedanz des Regeltransformators |
| $\vartheta$ | Phasenwinkel von $\underline{Z}$, Ersatzschaltbildparameter |
| $\cos\varphi$ | Wirkfaktor von 12 |

**Patentansprüche**

1. Verfahren zum Steuern eines Regeltransformators (13) mit einstellbarem Übersetzungsverhältnis, der zwischen ein erstes und zweites Wechselstromnetz (11, 12) geschaltet ist, wobei

   - die Zeigerdaten von Zeigern des ersten und/oder zweiten Wechselstromnetzes (11, 12) ermittelt werden (a);
   - die Ermittlung der Zeigerdaten des ersten und/oder zweiten Wechselstromnetzes (11,12) am Regeltransformator (13) erfolgt;

- für das erste Wechselstromnetz (11) ein Ersatzschaltbild mit Ersatzschaltbildparametern ermittelt wird (c);
- für das zweite Wechselstromnetz (12) ein Lastmodell mit Lastmodellparametern ermittelt wird (d);
- die Ersatzschaltbildparameter und die Lastmodellparameter aus den Zeigerdaten ermittelt werden (e);
- wenn auf ein gewünschtes Übersetzungsverhältnis umgeschaltet werden soll (b),

  • für das gewünschte Übersetzungsverhältnis ein Arbeitspunkt (A') des zweiten Wechselstromnetzes (12) vorhergesagt wird (f);
  • für den vorhergesagten Arbeitspunkt (A') ein Stabilitätskriterium in dem zweiten Wechselstromnetz (12) überprüft wird (g);
  • falls das Stabilitätskriterium erfüllt ist, auf das gewünschte Übersetzungsverhältnis umgeschaltet wird (h), sonst nicht, wobei

- das Stabilitätskriterium dadurch überprüft wird, dass

  • für den aktuellen Zustand (A) des zweiten Wechselstromnetzes (12) eine Stabilitätsreserve ΔP ermittelt wird;
  • für den vorhergesagten Arbeitspunkt (A') überprüft wird, ob

$$P_G - P' > \Delta P$$

gilt;

- $P_G$ die Grenz-Wirkleistung der P-U-Kennlinie ist;
- P' die Wirkleistung des vorhergesagten Arbeitspunktes (A') ist;
- als Stabilitätsreserve

$$\Delta P = P_G - P_H$$

gewählt wird;
$P_H$ die Hopf-Wirkleistung der P-U-Kennlinie ist.

2. Verfahren nach einem der vorigen Ansprüche, wobei

   - das Ersatzschaltbild gemäß dem Thevenin-Theorem oder dem Norton-Theorem gebildet wird.

3. Verfahren nach einem der vorigen Ansprüche, wobei

   - die Ersatzschaltbildparameter dadurch ermittelt werden, dass

     • für eine vorbestimmte Anzahl M von Zeitpunkten die Zeigerdaten ermittelt und gesammelt werden;
     • eine Zielfunktion unter Verwendung der gesammelten Zeigerdaten ermittelt wird;
     • die Ersatzschaltbildparameter durch Minimieren der Zielfunktion berechnet werden.

4. Verfahren nach einem der vorigen Ansprüche, wobei

   - für das Thevenin-Theorem als Zielfunktion

$$L = \sum_{k=1}^{M} \left\{ \left( \frac{E_{Th}}{\ddot{u}} \right)^2 - \left[ u_k^2 + 2Z \left( P_k \cos\vartheta + Q_k \sin\vartheta \right) + \left( Z i_k \right)^2 \right] \right\}^2$$

mit den Nebenbedingungen

$$EU \leq E_{Th} \leq EO \quad, \text{ mit } EU < 1 \text{ und } EO > 1$$

$$Z > 0$$

$$TU \leq \tan \vartheta \leq TO$$

gewählt wird;

- ü das Übersetzungsverhältnis ist;
- ZDk ein Zeigerdatensatz ist, der die zu einem k-ten Zeitpunkt (mit k = 1...M) gesammelten Zeigerdaten enthält;
- $P_k$ die aus dem Zeigerdatensatz ZDk berechnete Wirkleistung ist;
- $Q_k$ die aus dem Zeigerdatensatz ZDk berechnete Blindleistung ist;
- $i_k$ die aus dem Zeigerdatensatz ZDk berechnete Stromstärke ist;
- $u_k$ die aus dem Zeigerdatensatz ZDk berechnete Spannung ist;
- $E_{Th}$ die Thevenin-Spannung ist;
- eine Gesamtimpedanz, die das erste Wechselstromnetz (11) und den Regeltransformator (13) beschreibt, durch

$$\underline{Z} = Z \cdot e^{j\vartheta} = \frac{\underline{Z}_{Th} + \underline{Z}_{Trf}}{\ddot{u}^2}$$

definiert wird;

- $\underline{Z}_{Th}$ die Thévenin-Impedanz ist;
- $\underline{Z}_{Trf}$ die Impedanz des Regeltransformators (13) ist;
- $Z$ der Scheinwiderstand der Gesamtimpedanz ist;
- $\vartheta$ der Phasenwinkel der Gesamtimpedanz ist;
- $Z$, $\vartheta$ und $E_{Th}$ die Ersatzschaltbildparameter sind;
- EU und EO vorbestimmte untere und obere Grenzwerte sind;
- TU und TO vorbestimmte untere und obere Grenzwerte sind.

5. Verfahren nach einem der vorigen Ansprüche, wobei

- das Lastmodell das zweite Wechselstromnetz (12) als eine spannungsabhängige Gesamtlast modelliert; und/oder
- das Lastmodell die Wirkleistung und die Blindleistung des zweiten Wechselstromnetzes (12) in Abhängigkeit von der angelegten Spannung beschreibt.

6. Verfahren nach dem vorigen Anspruch, wobei

- das Lastmodell dadurch modelliert wird, dass

• für eine vorbestimmte Anzahl N von Umschaltungen die Zeigerdaten vor und nach jeder dieser Umschaltungen ermittelt und gesammelt werden;
• eine erste Zielfunktion für die Wirkleistung und eine zweite Zielfunktion für die Blindleistung unter Verwendung der gesammelten Zeigerdaten ermittelt werden;
• die Lastmodellparameter durch Minimieren der Zielfunktionen berechnet werden.

7. Verfahren nach einem der vorigen Ansprüche, wobei

- das Lastmodell ein exponentielles Lastmodell oder ein polynomisches Lastmodell oder ein kombiniertes Lastmodell ist.

8. Verfahren nach einem der vorigen Ansprüchen, wobei

- für das exponentielle Lastmodell als erste Zielfunktion

$$J = \sum_{k=1}^{N}\left[\frac{P_{1,k}}{P_{2,k}} - \left(\frac{u_{1,k}}{u_{2,k}}\right)^{x}\right]^{2}$$

und als zweite Zielfunktion

$$K = \sum_{k=1}^{N}\left[\frac{Q_{1,k}}{Q_{2,k}} - \left(\frac{u_{1,k}}{u_{2,k}}\right)^{y}\right]^{2}$$

mit den Nebenbedingungen

$$0 \le x \le 2$$

$$0 \le y \le YO$$

gewählt wird;
- für das polynomische Lastmodell als erste Zielfunktion

$$J = \sum_{k=1}^{N}\left\{\left[u_{1,k}^{2} - \frac{P_{1,k}}{P_{2,k}}u_{2,k}^{2}\right]x_1 + \left[u_{1,k} - \frac{P_{1,k}}{P_{2,k}}u_{2,k}\right]x_2 + \left[1 - \frac{P_{1,k}}{P_{2,k}}\right]x_3\right\}^{2}$$

und als zweite Zielfunktion

$$K = \sum_{k=1}^{N}\left\{\left[u_{1,k}^{2} - \frac{Q_{1,k}}{Q_{2,k}}u_{2,k}^{2}\right]y_1 + \left[u_{1,k} - \frac{Q_{1,k}}{Q_{2,k}}u_{2,k}\right]y_2 + \left[1 - \frac{Q_{1,k}}{Q_{2,k}}\right]y_3\right\}^{2}$$

mit den Nebenbedingungen

$$0 \le x_i \le 1 \ \text{ und } \ 0 \le y_i \le 1 \ , \ \text{ mit i = 1...3}$$

$$x_1 + x_2 + x_3 = y_1 + y_2 + y_3 = 1$$

gewählt wird;
- für das kombinierte Lastmodell als erste Zielfunktion

$$J = \sum_{k=1}^{N}\left\{\left[u_{1,k}^{x_4} - \frac{P_{1,k}}{P_{2,k}}u_{2,k}^{x_4}\right]x_1 + \left[u_{1,k}^{x_5} - \frac{P_{1,k}}{P_{2,k}}u_{2,k}^{x_5}\right]x_2 + \left[u_{1,k}^{x_6} - \frac{P_{1,k}}{P_{2,k}}u_{2,k}^{x_6}\right]x_3\right\}^{2}$$

und als zweite Zielfunktion

$$K = \sum_{k=1}^{N} \left\{ \left[ u_{1,k}^{y_4} - \frac{Q_{1,k}}{Q_{2,k}} u_{2,k}^{y_4} \right] y_1 + \left[ u_{1,k}^{y_5} - \frac{Q_{1,k}}{Q_{2,k}} u_{2,k}^{y_5} \right] y_2 + \left[ u_{1,k}^{y_6} - \frac{Q_{1,k}}{Q_{2,k}} u_{2,k}^{y_6} \right] y_3 \right\}^2$$

mit den Nebenbedingungen

$$0 \leq x_i \leq 1 \ \text{und} \ 0 \leq y_i \leq 1 \ , \ \text{mit i = 1...3}$$

$$0 \leq x_i \ \text{und} \ 0 \leq y_i \ , \ \text{mit j = 4...6}$$

$$x_1 + x_2 + x_3 = y_1 + y_2 + y_3 = 1$$

gewählt wird;
- $P_{1,k}$ die aus den gesammelten Zeigerdaten berechnete Wirkleistung vor der k-ten Umschaltung ist;
- $P_{2,k}$ die aus den gesammelten Zeigerdaten berechnete Wirkleistung nach der k-ten Umschaltung ist;
- $Q_{1,k}$ die aus den gesammelten Zeigerdaten berechnete Blindleistung vor der k-ten Umschaltung ist;
- $Q_{2,k}$ die aus den gesammelten Zeigerdaten berechnete Blindleistung nach der k-ten Umschaltung ist;
- $u_{1,k}$ die aus den gesammelten Zeigerdaten berechnete Spannung vor der k-ten Umschaltung ist;
- $u_{2,k}$ die aus den gesammelten Zeigerdaten berechnete Spannung im nach der k-ten Umschaltung ist;
- x, $x_i$, $x_j$, y, $y_i$, $y_j$ die jeweiligen Lastmodellparameter sind;
- YO ein vorbestimmter oberer Grenzwert ist.

9. Verfahren nach einem der vorigen Ansprüche, wobei

- der Arbeitspunkt (A') mithilfe einer Lastflussberechnung vorhergesagt wird; und/oder
- das Stabilitätskriterium mithilfe einer Lastflussberechnung überprüft wird.

10. Verfahren nach einem der vorigen Ansprüche, wobei

- das Stabilitätskriterium dadurch überprüft wird, dass

• für den aktuellen Zustand (A) des zweiten Wechselstromnetzes (12) eine Stabilitätsreserve $\Delta$P ermittelt wird;
• für den vorhergesagten Arbeitspunkt (A') überprüft wird, ob

$$P_G - P' > \Delta P$$

gilt;

- $P_G$ die Grenz-Wirkleistung der P-U-Kennlinie ist;
- P' die Wirkleistung des vorhergesagten Arbeitspunktes (A') ist;
- die Stabilitätsreserve mithilfe einer Lastflussberechnung ermittelt wird; und/oder
- das Stabilitätskriterium in Abhängigkeit von der ersten Ableitung U'(P) und/oder von dem Betrag der ersten Ableitung |U'(P)| und/oder von der zweiten Ableitung U"(P) und/oder von dem Betrag der zweiten Ableitung |U"(P)| der P-U-Kennlinie überprüft wird.

11. Verfahren nach einem der vorigen Ansprüche, wobei

- ein Zustandsänderungskriterium für den Zustand des ersten Wechselstromnetzes (11) überprüft wird;
- falls das Zustandsänderungskriterium erfüllt ist, das Ermitteln der Ersatzschaltbildparameter wiederholt wird;
- eine Gesamtimpedanz, die das erste Wechselstromnetz (11) und den Regeltransformator (13) beschreibt, durch

$$\underline{Z} = R + jX = \frac{\underline{Z}_{Th} + \underline{Z}_{Trf}}{\ddot{u}^2}$$

definiert;
- $\underline{Z}_{Th}$ die Thévenin-Impedanz ist;
- $\underline{Z}_{Trf}$ die Impedanz des Regeltransformators (13) ist;
- R der Wirkwiderstand der Gesamtimpedanz ist;
- X der Blindwiderstand der Gesamtimpedanz ist;
- ZDi ein Zeigerdatensatz ist, der die zu einem i-ten Zeitpunkt gesammelten Zeigerdaten enthält;
- das Zustandsänderungskriterium dadurch überprüft wird, dass

• aus dem jüngsten Zeigerdatensatz ZD1 und den drei vorangegangenen Zeigerdatensätzen ZD2, ZD3, ZD4 jeweils die Spannung $u_i$, die Stromstärke $i_i$, die Wirkleistung $P_i$ und die Blindleistung $Q_i$ berechnet werden, mit i = 1...4;
• überprüft wird, ob wenigstens eine der folgenden Bedingungen

$$E_1{}^2 - 4D_1F_1 \geq 0$$

$$\Delta X < XO$$

nicht gilt;

- die folgenden Definitionen verwendet werden:

$$A_1 = (u_1^2 - u_2^2)(i_1^2 - i_3^2) - (u_1^2 - u_3^2)(i_1^2 - i_2^2)$$

$$A_2 = (u_2^2 - u_3^2)(i_2^2 - i_4^2) - (u_2^2 - u_4^2)(i_2^2 - i_3^2)$$

$$B_1 = 2(P_1 - P_2)(i_1^2 - i_3^2) - 2(P_1 - P_3)(i_1^2 - i_2^2)$$

$$B_2 = 2(P_2 - P_3)(i_2^2 - i_4^2) - 2(P_2 - P_4)(i_2^2 - i_3^2)$$

$$C_1 = 2(Q_1 - Q_2)(i_1^2 - i_3^2) - 2(Q_1 - Q_3)(i_1^2 - i_2^2)$$

$$C_2 = 2(Q_2 - Q_3)(i_2^2 - i_4^2) - 2(Q_2 - Q_4)(i_2^2 - i_3^2)$$

$$D_1 = \frac{B_1^2 + C_1^2}{B_1^2}(i_1^2 - i_2^2)$$

$$D_2 = \frac{B_2^2 + C_2^2}{B_2^2}(i_2^2 - i_3^2)$$

$$E_1 = \frac{2A_1C_1}{B_1^2}(i_1^2 - i_2^2) - 2\frac{C_1}{B_1}(P_1 - P_2) + 2(Q_1 - Q_2)$$

$$E_2 = \frac{2A_2C_2}{B_2^2}(i_2^2 - i_3^2) - 2\frac{C_2}{B_2}(P_2 - P_3) + 2(Q_2 - Q_3)$$

$$F_1 = (u_1^2 - u_2^2) + \frac{A_1^2}{B_1^2}(i_1^2 - i_2^2) - 2\frac{A_1}{B_1}(P_1 - P_2)$$

$$F_2 = (u_2^2 - u_3^2) + \frac{A_2^2}{B_2^2}(i_2^2 - i_3^2) - 2\frac{A_2}{B_2}(P_2 - P_3)$$

- $X_1$ der Blindwiderstand der Gesamtimpedanz für die Zeigerdatensätze ZD1 ...ZD3 ist und aus

$$D_1 X_1^2 + E_1 X_1 + F_1 = 0 \quad \text{und} \quad X_1 > 0$$

errechnet wird;
- $X_2$ der Blindwiderstand der Gesamtimpedanz für die Zeigerdatensätze ZD2...ZD4 ist und aus

$$D_2 X_2^2 + E_2 X_2 + F_2 = 0 \quad \text{und} \quad X_2 > 0$$

errechnet wird;
- die relative Änderung des Blindwiderstands durch

$$\Delta X = \left| \frac{(X_1 - X_2)}{X_2} \right|$$

definiert wird;
- XO ein vorbestimmter oberer Grenzwert ist.

12. Verfahren nach einem der vorigen Ansprüche, wobei

- falls das Stabilitätskriterium nicht erfüllt ist, ermittelt wird, wie viel Blindleistung erforderlich ist, um das Stabilitätskriterium zu erfüllen, und eine entsprechend dimensionierte Blindleistungskompensationsanlage (16), die mit dem zweiten Wechselstromnetz verbunden ist, angesteuert wird.

13. Elektrische Anlage (10) zum Koppeln zweier Wechselstromnetze (11, 12), umfassend

- einen Regeltransformator (13) mit einstellbarem Übersetzungsverhältnis, der zwischen ein erstes und zweites Wechselstromnetz 11, (12) geschaltet ist;
- eine Messeinrichtung (14), die Wechselstromgrößen des ersten und/oder zweiten Wechselstromnetzes (11, 12) am Regeltransformator (13) erfassen kann;
- eine Steuereinrichtung (15), die an die Messeinrichtung (14) und an den Regeltransformator (13) gekoppelt ist; wobei die Steuereinrichtung (15) derart ausgebildet ist, dass sie
- aus den Wechselstromgrößen die Zeigerdaten von Zeigern des ersten und/oder zweiten Wechselstromnetzes (11, 12) ermittelt;
- für das erste Wechselstromnetz (11) ein Ersatzschaltbild mit Ersatzschaltbildparametern ermittelt;

- für das zweite Wechselstromnetz (12) ein Lastmodell mit Lastmodellparametern ermittelt;
- die Ersatzschaltbildparameter und die Lastmodellparameter aus den Zeigerdaten ermittelt;
- die Zeigerdaten überwacht und je nach Überwachungsergebnis ein Umschaltsignal, das ein gewünschtes Übersetzungsverhältnis enthält, mithilfe der Zeigerdaten vorbereitet;
- wenn das Umschaltsignal vorbereitet ist,

    • für das gewünschte Übersetzungsverhältnis einen Arbeitspunkt (A') des zweiten Wechselstromnetzes (12) vorhersagt;
    • für den vorhergesagten Arbeitspunkt (A') ein Stabilitätskriterium in dem zweiten Wechselstromnetz (12) überprüft;
    • falls das Stabilitätskriterium erfüllt ist, das Umschaltsignal an den Regeltransformator (13) sendet, sonst nicht; wobei

- das Stabilitätskriterium dadurch überprüft wird, dass

    • für den aktuellen Zustand (A) des zweiten Wechselstromnetzes (12) eine Stabilitätsreserve $\Delta P$ ermittelt wird;
    • für den vorhergesagten Arbeitspunkt (A') überprüft wird, ob

$$P_G - P' > \Delta P$$

gilt;

- $P_G$ die Grenz-Wirkleistung der P-U-Kennlinie ist;
- P' die Wirkleistung des vorhergesagten Arbeitspunktes (A') ist;
- als Stabilitätsreserve

$$\Delta P = P_G - P_H$$

gewählt wird;
- $P_H$ die Hopf-Wirkleistung der P-U-Kennlinie ist.

## Claims

1. Method of controlling a regulating transformer (13) with a settable translation ratio, which is switched between a first alternating current mains (11) and a second alternating current mains (12), wherein

    - the phasor data of phasors of the first and/or second alternating current mains (11, 12) are detected (a);
    - the phase data of phasors of the first and/or second alternating current mains (11, 12) are detected at the regulating transformer (13);
    - an equivalent circuit diagram with equivalent circuit diagram parameters is determined for the first alternating current mains (11) (c);
    - a load model with load model parameters is determined for the second alternating current mains (12) (d);
    - the equivalent circuit diagram parameters and the load model parameters are determined from the phasor data (e);
    - when switching over to a desired translation ratio is to take place (b)

        - a working point (A') of the second alternating current mains (12) is predicted for the desired translation ratio (f);
        - a stability criterion in the second alternating current mains (12) is checked for the predicted working point (A') (g);
        - switching over to the desired translation ratio is carried out if the stability criterion is fulfilled (h), but otherwise not; wherein

    - the stability margin is checked in that

- a stability reserve ΔP is determined for the current state (A) of the second alternating current mains (12);
- for the predicted working point (A') it is checked whether

$$P_G - P' > \Delta P$$

is applicable;
- $P_G$ is the limit effective power of the P-U plot;
- P' is the effective power of the predicted working point (A');
- as stability margin there is selected

$$\Delta P = P_G - P_H;$$

- $P_H$ is the Hopf effective power of the P-U plot.

2. Method according to the preceding claim, wherein

- the substitute circuit diagram is formed in accordance with the Thevenin theorem or the Norton theorem.

3. Method according to one of the preceding claims, wherein

- the equivalent circuit diagram parameters are determined in that

- the phasor data are determined and collated for a predetermined number M of time instants;
- a target function is determined with use of the collated phasor data;
- the equivalent circuit diagram parameters are calculated by minimisation of the target function.

4. Method according to any one of the preceding claims, wherein

- for the Thevenin theorem as function

$$L = \sum_{k=1}^{M} \left\{ \left( \frac{E_{Th}}{\ddot{u}} \right)^2 - \left[ u_k^2 + 2Z(P_k \cos\vartheta + Q_k \sin\vartheta) + (Zi_k)^2 \right] \right\}^2$$

with the secondary conditions

$$EU \le E_{Th} \le EO, \text{ with } EU < 1 \text{ and } EO > 1$$

$$Z > 0$$

$$TU \le \tan\vartheta \le TO$$

is selected;
- ü is the translation ratio;
- ZDk is a phasor data set containing the phasor data collated at a k-th time instant (wherein k = 1 ... M);
- $P_k$ is the effective power calculated from the phasor data set ZDk;
- $Q_k$ is the reactive power calculated from the phasor data set ZDk;
- $i_k$ is the amperage calculated from the phasor data set ZDk;
- $u_k$ is the voltage calculated from the phasor data set ZDk;
- $E_{Th}$ is the Thévenin voltage;
- a total impedance describing the first alternating current mains (11) and the regulating transformer (13) is

defined by:

$$\underline{Z} = Z \cdot e^{j\vartheta} = \frac{\underline{Z}_{Th} + \underline{Z}_{Trf}}{\ddot{u}^2} \; ;$$

- $\underline{Z}_{Th}$ is the Thevenin impedance;
- $\underline{Z}_{Trf}$ is the impedance of the regulating transformer (13);
- $\overline{Z}$ is the apparent resistance of the total impedance;
- $\vartheta$ is the phase angle of the total impedance;
- $Z$, $\vartheta$ and $E_{Th}$ are the equivalent circuit diagram parameters;
- EU and EO are predetermined lower and upper limit values;
- TU and TO are predetermined lower and upper limit values.

5. Method according to any one of the preceding claims, wherein

   - the load model models the second alternating current mains (12) as a voltage-dependent total load; and/or
   - the load model describes the effective power and the reactive power of the second alternating current mains (12) in dependence on the applied voltage.

6. Method according to the preceding claim, wherein

   - the load model is modelled in that

     - for a predetermined number N of switching-over processes the phasor data are determined and collated before and after each of these switching-over processes;
     - a first target function for the effective power and a second target function for the reactive power are determined with use of the collated phasor data;
     - the load model parameters are calculated by minimisation of the target functions.

7. Method according to any one of the preceding claims, wherein

   - the load model is an exponential load model or a polynomial load model or a combined load model.

8. Method according to any one of the preceding claims, wherein

   - for the first exponential load model there is selected as first target function

$$J = \sum_{k=1}^{N} \left[ \frac{P_{1,k}}{P_{2,k}} - \left( \frac{u_{1,k}}{u_{2,k}} \right)^x \right]^2$$

and as second target function

$$K = \sum_{k=1}^{N} \left[ \frac{Q_{1,k}}{Q_{2,k}} - \left( \frac{u_{1,k}}{u_{2,k}} \right)^y \right]^2$$

with the secondary conditions

$$0 \leq x \leq 2$$

$$0 \le y \le YO \, ;$$

- for the polynomial load model there is selected as first target function

$$J = \sum_{k=1}^{N} \left\{ \left[ u_{1,k}^2 - \frac{P_{1,k}}{P_{2,k}} u_{2,k}^2 \right] x_1 + \left[ u_{1,k} - \frac{P_{1,k}}{P_{2,k}} u_{2,k} \right] x_2 + \left[ 1 - \frac{P_{1,k}}{P_{2,k}} \right] x_3 \right\}^2$$

and as second target function

$$K = \sum_{k=1}^{N} \left\{ \left[ u_{1,k}^2 - \frac{Q_{1,k}}{Q_{2,k}} u_{2,k}^2 \right] y_1 + \left[ u_{1,k} - \frac{Q_{1,k}}{Q_{2,k}} u_{2,k} \right] y_2 + \left[ 1 - \frac{Q_{1,k}}{Q_{2,k}} \right] y_3 \right\}^2$$

with the secondary conditions

$$0 \le x_i \le 1 \text{ and } 0 \le y_i \le 1, \text{ wherein i = 1...3}$$

$$x_1 + x_2 + x_3 = y_1 + y_2 + y_3 = 1 \, ;$$

- for the combined load model there is selected as first target function

$$J = \sum_{k=1}^{N} \left\{ \left[ u_{1,k}^{x_4} - \frac{P_{1,k}}{P_{2,k}} u_{2,k}^{x_4} \right] x_1 + \left[ u_{1,k}^{x_5} - \frac{P_{1,k}}{P_{2,k}} u_{2,k}^{x_5} \right] x_2 + \left[ u_{1,k}^{x_6} - \frac{P_{1,k}}{P_{2,k}} u_{2,k}^{x_6} \right] x_3 \right\}^2$$

and as second target function

$$K = \sum_{k=1}^{N} \left\{ \left[ u_{1,k}^{y_4} - \frac{Q_{1,k}}{Q_{2,k}} u_{2,k}^{y_4} \right] y_1 + \left[ u_{1,k}^{y_5} - \frac{Q_{1,k}}{Q_{2,k}} u_{2,k}^{y_5} \right] y_2 + \left[ u_{1,k}^{y_6} - \frac{Q_{1,k}}{Q_{2,k}} u_{2,k}^{y_6} \right] y_3 \right\}^2$$

with the secondary conditions

$$0 \le x_i \le 1 \text{ and } 0 \le y_i \le 1, \text{ wherein i = 1...3}$$

$$0 \le x_i \text{ and } 0 \le y_i, \text{ wherein j = 4...6}$$

$$x_1 + x_2 + x_3 = y_1 + y_2 + y_3 = 1 \, ;$$

- $P_{1,k}$ is the effective power, which is calculated from the collated phasor data, before the k-th switching-over process;
- $P_{2,k}$ is the effective power, which is calculated from the collated phasor data, after the k-th switching-over process;
- $Q_{1,k}$ is the reactive power, which is calculated from the collated phasor data, before the k-th switching-over process;
- $Q_{2,k}$ is the reactive power, which is calculated from the collated phasor data, after the k-th switching-over process;

- $u_{1,k}$ is the voltage, which is calculated from the collated phasor data, before the k-th switching-over process;
- $u_{2,k}$ is the voltage, which is calculated from the collated phasor data, after the k-th switching-over process;
- x, $x_i$, $x_j$, y, $y_i$, $y_j$ are the respective load model parameters;
- YO is a predetermined upper limit value.

9. Method according to any one of the preceding claims, wherein

- the working point (A') is predicted with the help of a load flow calculation; and/or
- the stability criterion is checked with the help of a load flow calculation.

10. Method according to any one of the preceding claims, wherein

- the stability criterion is checked in that

- a stability margin ΔP is determined for the instantaneous state (A) of the second alternating current mains (12);
- for the predicted working point (A') it is checked whether

$$P_G - P' > \Delta P$$

is applicable;

- $P_G$ is the limit effective power of the P-U plot;
- P' is the effective power of the predicted working point (A');
- the stability margin is determined with the help of a load flow calculation; and/or
- the stability criterion is checked in dependence on the first derivation U'(P) and/or on the amount of the first derivation |U'(P)| and/or on the second derivation U"(P) and/or on the amount of the second derivation |U"(P)| of the P-U plot.

11. Method according to any one of the preceding claims, wherein

- a state change criterion for the state of the first alternating current mains (11) is checked;
- if the state change criterion is fulfilled, determination of the equivalent circuit diagram parameters is repeated;
- a total impedance describing the first alternating current mains (11) and the regulating transformer (13) is defined by

$$\underline{Z} = R + jX = \frac{\underline{Z}_{Th} + \underline{Z}_{Trf}}{\ddot{u}^2} \; ;$$

- $\underline{Z}_{Th}$ is the Thevenin impendance;
- $\underline{Z}_{Trf}$ is the impedance of the regulating transformer (13);
- R is the effective resistance of the total impedance;
- X is the reactive resistance of the total impedance;
- ZDi is a phasor data set containing the phasor data collated at an i-th time instant;
- the state change criterion is checked in that

- the voltage $u_i$, the amperage $i_i$, the effective power $P_i$ and the reactive power $Q_i$, wherein $i$ = 1...4, are respectively calculated from the youngest phasor data set ZD1 and the three preceding phasor data sets ZD2, ZD3 and ZD4;
- it is checked whether at least one of the following conditions

$$E_1{}^2 - 4D_1F_1 \geq 0$$

$$\Delta X < XO$$

is not applicable;

- the following definitions are used:

$$A_1 = (u_1^2 - u_2^2)(i_1^2 - i_3^2) - (u_1^2 - u_3^2)(i_1^2 - i_2^2)$$

$$A_2 = (u_2^2 - u_3^2)(i_2^2 - i_4^2) - (u_2^2 - u_4^2)(i_2^2 - i_3^2)$$

$$B_1 = 2(P_1 - P_2)(i_1^2 - i_3^2) - 2(P_1 - P_3)(i_1^2 - i_2^2)$$

$$B_2 = 2(P_2 - P_3)(i_2^2 - i_4^2) - 2(P_2 - P_4)(i_2^2 - i_3^2)$$

$$C_1 = 2(Q_1 - Q_2)(i_1^2 - i_3^2) - 2(Q_1 - Q_3)(i_1^2 - i_2^2)$$

$$C_2 = 2(Q_2 - Q_3)(i_2^2 - i_4^2) - 2(Q_2 - Q_4)(i_2^2 - i_3^2)$$

$$D_1 = \frac{B_1^2 + C_1^2}{B_1^2}(i_1^2 - i_2^2)$$

$$D_2 = \frac{B_2^2 + C_2^2}{B_2^2}(i_2^2 - i_3^2)$$

$$E_1 = \frac{2A_1C_1}{B_1^2}(i_1^2 - i_2^2) - 2\frac{C_1}{B_1}(P_1 - P_2) + 2(Q_1 - Q_2)$$

$$E_2 = \frac{2A_2C_2}{B_2^2}(i_2^2 - i_3^2) - 2\frac{C_2}{B_2}(P_2 - P_3) + 2(Q_2 - Q_3)$$

$$F_1 = (u_1^2 - u_2^2) + \frac{A_1^2}{B_1^2}(i_1^2 - i_2^2) - 2\frac{A_1}{B_1}(P_1 - P_2)$$

$$F_2 = (u_2^2 - u_3^2) + \frac{A_2^2}{B_2^2}(i_2^2 - i_3^2) - 2\frac{A_2}{B_2}(P_2 - P_3)$$

- $X_1$ is the reactive resistance of the total impedance for the phasor data sets ZD1...ZD3 and is calculated from

$$D_1 X_1^2 + E_1 X_1 + F_1 = 0 \quad \text{and} \quad X_1 > 0 \; ;$$

- $X_2$ is the reactive resistance of the total impedance for the phasor data sets ZD2...ZD4 and is calculated from

$$D_2 X_2^2 + E_2 X_2 + F_2 = 0 \quad \text{and} \quad X_2 > 0;$$

- the relative change of the reactive resistance is defined by

$$\Delta X = \left| \frac{(X_1 - X_2)}{X_2} \right|;$$

- XO is a predefined upper limit value.

12. Method according to any one of the preceding claims, wherein

- if the stability criterion is not fulfilled it is determined how much reactive power is required in order to fulfil the stability criterion and an appropriately dimensioned reactive power compensation installation (16) connected with the second alternating current mains is controlled.

13. Electrical installation (10) for coupling two alternating current mains (11, 12), comprising

- a regulating transformer (13) with a settable translation ratio, which is switched between a first alternating current mains (11) and a second alternating current mains (12);
- a measuring device (14) able to detect the alternating current magnitudes of the first and/or second alternating current mains (11, 12) at the regulation transformer;
- a control device (15) coupled to the measuring device (14) and the regulating transformer (13);
wherein the control device (15) is so constructed that it
- determines the phasor data of phasors of the first and/or second alternating current mains (11) from the alternating current magnitudes;
- determines for the first alternating current mains (11) an equivalent circuit diagram with equivalent circuit diagram parameters;
- determines for the second alternating current mains (12) a load model with load model parameters;
- determines the equivalent circuit diagram parameters and the load model parameters from the phasor data;
- monitors the phasor data and depending on the respective monitoring result provides with the help of the phasor data a switch-over signal containing a desired translation ratio;
- if the switch-over signal is prepared:

    - predicts a working point (A') of the second alternating current mains (12) for the desired translation ratio;
    - checks a stability criterion in the second alternating current mains (12) for the predicted working point (A');
    - transmits the switch-over signal to the regulating transformer (13) if the stability criterion is fulfilled, but otherwise not; wherein

- the stability margin is checked in that

    - a stability reserve ∆P is determined for the current state (A) of the second alternating current mains (12);
    - for the predicted working point (A') it is checked whether

$$P_G - P' > \Delta P$$

    is applicable;
    - $P_G$ is the limit effective power of the P-U plot;
    - P' is the effective power of the predicted working point (A');
    - as stability margin there is selected

$$\Delta P = P_G - P_H;$$

- $P_H$ is the Hopf effective power of the P-U plot.

**Revendications**

1. Procédé de commande d'un transformateur de régulation (13) ayant un rapport de transmission réglable qui est branché entre un premier réseau de courant alternatif et un second réseau de courant alternatif (11, 12), selon lequel :

   - les données de pointeur du premier réseau de courant alternatif et/ou du second réseau de courant alternatif (11, 12) sont évaluées (a),
   - l'évaluation des données de pointeur du premier réseau de courant alternatif et/ou du second réseau de courant alternatif (11, 12) est effectuée sur le transformateur de régulation (13),
   - pour le premier réseau de courant alternatif (11) on évalue un circuit équivalent ayant des paramètres de circuit équivalent (c),
   - pour le second réseau de courant alternatif (12) on évalue un modèle de charges ayant des paramètres de modèle de charge (d),
   - les paramètres du circuit équivalent et les paramètres du modèle de charge sont évalués à partir des données de pointeur (e),
   - lorsqu'on doit effectuer une commutation sur un rapport de transmission souhaité (b),

     • pour le rapport de transmission souhaité on prévoit un point de travail (A') du second réseau de courant alternatif (12) (f),
     • pour le point de travail (A') prévu on contrôle un critère de stabilité dans le second réseau de courant alternatif (12) (g),
     • si le critère de stabilité est rempli, on effectue une commutation sur le rapport de transmission souhaité (h), et sinon pas,

   - le critère de stabilité étant contrôlé de sorte que :

     • pour l'état actuel (A) du second réseau de courant alternatif (12) on évalue une réserve de stabilité ΔP,
     • pour le point de travail (A') prévu on contrôle si,

$$P_G - P' > \Delta P$$

   - $P_G$ représentant la puissance active limite de la courbe caractéristique P-U,
   - P' représentant la puissance active du point de travail (A') prévu,
   - en tant que réserve de stabilité étant choisi,

$$\Delta P = P_G - P_H$$

   $P_H$ étant la puissance active de Hopf de la courbe caractéristique P-U.

2. Procédé conforme à la revendication précédente,
   selon lequel
   le circuit équivalent est formé selon le théorème de Thévenin ou selon le théorème de Norton.

3. Procédé conforme à l'une des revendications précédentes,
   selon lequel :

   - les paramètres du circuit équivalent sont évalués de sorte que :

     • les données de pointeur sont évaluées et recueillies pour un nombre M prédéfini d'instants,
     • une fonction cible est évaluée en utilisant les données de pointeur recueillies,
     • les paramètres du circuit équivalent sont calculés en minimisant la fonction cible.

4. Procédé conforme à l'une des revendications précédentes, selon lequel :

- pour le théorème de Thévenin on choisit en tant que fonction cible

$$L = \sum_{k=1}^{M} \left\{ \left( \frac{E_{Th}}{\ddot{u}} \right)^2 - \left[ u_k^2 + 2Z(P_k \cos\vartheta + Q_k \sin\vartheta) + (Zi_k)^2 \right] \right\}^2$$

étant précisé que

$$EU \leq E_{Th} \leq EO \quad \text{, avec } EU < 1 \quad \text{et} \quad EO > 1$$

$$Z > 0$$

$$TU \leq \tan\vartheta \leq TO$$

dans laquelle:

- $\ddot{u}$ représente le rapport de transmission,
- ZDk représente un jeu de données de pointeur qui renferme les données de pointeur recueillies à l'instant k avec k = 1-M,
- $P_K$ représente la puissance active calculée à partir du jeu de données de pointeur ZDk,
- $Q_K$ représente la puissance réactive calculée à partir du jeu de données de pointeur ZDk,
- $i_k$ représente l'intensité du courant calculée à partir du jeu de données de pointeur ZDk,
- $u_k$ représente la tension calculée à partir du jeu de données de pointeur ZDk,
- $E_{Th}$ représente la tension de Thévenin,

- l'impédance totale qui décrit le premier réseau de courant alternatif (11) et le transformateur de régulation (13) étant définie par la formule

$$\underline{Z} = Z \cdot e^{j\vartheta} = \frac{\underline{Z}_{Th} + \underline{Z}_{Trf}}{\ddot{u}^2}$$

dans laquelle:

- $Z_{Th}$ représente l'impédance de Thévenin,
- $Z_{Trf}$ représente l'impédance du transformateur de régulation (13),
- Z représente la composante apparente de l'impédance totale,
- $\vartheta$ représente l'angle de phase de l'impédance totale,
- Z, $\vartheta$ et $E_{th}$ sont des paramètres du circuit équivalent,
- EU et EO sont des valeurs limites inférieures et supérieures prédéfinies,
- TU et TO sont des valeurs limites inférieures et supérieures prédéfinies.

5. Procédé conforme à l'une des revendications précédentes, selon lequel

- le modèle de charge modélise le second réseau de courant alternatif (12) sous la forme d'une charge totale dépendant de la tension, et/ou
- le modèle de charge décrit la puissance active et la puissance réactive du second réseau de courant alternatif (12) en fonction de la tension active.

**6.** Procédé conforme à l'une des revendications précédentes, selon lequel :

- le modèle de charge est modélisé de sorte que :

• pour un nombre N prédéfini de commutations, les données de pointeur sont évaluées et recueillies avant et après chacune de ces commutations,
• une première fonction cible pour la puissance active et une seconde fonction cible pour la puissance réactive sont évaluées en utilisant les données de pointeur recueillies,
• les paramètres du modèle de charge sont calculés en minimisant les fonctions cibles.

**7.** Procédé conforme à l'une des revendications précédentes, selon lequel :

- le modèle de charge est un modèle de charge exponentiel ou un modèle de charge polynomial ou un modèle de charge combiné.

**8.** Procédé conforme à l'une des revendications précédentes, selon lequel

- pour le modèle de charge exponentiel on choisit en tant que première fonction cible la fonction :

$$J = \sum_{k=1}^{N} \left[ \frac{P_{1,k}}{P_{2,k}} - \left( \frac{u_{1,k}}{u_{2,k}} \right)^x \right]^2$$

et en tant que seconde fonction cible la fonction :

$$K = \sum_{k=1}^{N} \left[ \frac{Q_{1,k}}{Q_{2,k}} - \left( \frac{u_{1,k}}{u_{2,k}} \right)^y \right]^2$$

étant précisé que :

$$0 \leq x \leq 2$$

$$0 \leq y \leq YO$$

- pour le modèle de charge polynomial on choisit en tant que première fonction cible la fonction :

$$J = \sum_{k=1}^{N} \left\{ \left[ u_{1,k}^2 - \frac{P_{1,k}}{P_{2,k}} u_{2,k}^2 \right] x_1 + \left[ u_{1,k} - \frac{P_{1,k}}{P_{2,k}} u_{2,k} \right] x_2 + \left[ 1 - \frac{P_{1,k}}{P_{2,k}} \right] x_3 \right\}^2$$

et en tant que seconde fonction cible la fonction :

$$K = \sum_{k=1}^{N} \left\{ \left[ u_{1,k}^2 - \frac{Q_{1,k}}{Q_{2,k}} u_{2,k}^2 \right] y_1 + \left[ u_{1,k} - \frac{Q_{1,k}}{Q_{2,k}} u_{2,k} \right] y_2 + \left[ 1 - \frac{Q_{1,k}}{Q_{2,k}} \right] y_3 \right\}^2$$

étant précisé que :

$$0 \le x_i \le 1 \quad \text{et} \quad 0 \le y_i \le 1 \quad, \text{avec } i = 1...3$$

$$x_1 + x_2 + x_3 = y_1 + y_2 + y_3 = 1$$

- pour le modèle de charge combiné on choisit en tant que première fonction cible la fonction :

$$J = \sum_{k=1}^{N} \left\{ \left[ u_{1,k}^{x_4} - \frac{P_{1,k}}{P_{2,k}} u_{2,k}^{x_4} \right] x_1 + \left[ u_{1,k}^{x_5} - \frac{P_{1,k}}{P_{2,k}} u_{2,k}^{x_5} \right] x_2 + \left[ u_{1,k}^{x_6} - \frac{P_{1,k}}{P_{2,k}} u_{2,k}^{x_6} \right] x_3 \right\}^2$$

et en tant que seconde fonction cible la fonction :

$$K = \sum_{k=1}^{N} \left\{ \left[ u_{1,k}^{y_4} - \frac{Q_{1,k}}{Q_{2,k}} u_{2,k}^{y_4} \right] y_1 + \left[ u_{1,k}^{y_5} - \frac{Q_{1,k}}{Q_{2,k}} u_{2,k}^{y_5} \right] y_2 + \left[ u_{1,k}^{y_6} - \frac{Q_{1,k}}{Q_{2,k}} u_{2,k}^{y_6} \right] y_3 \right\}^2$$

étant précisé que :

$$0 \le x_i \le 1 \quad \text{et} \quad 0 \le y_i \le 1 \quad, \text{avec } i = 1...3$$

$$0 \le x_j \quad \text{et} \quad 0 \le y_j \quad, \text{avec } j = 4...6$$

$$x_1 + x_2 + x_3 = y_1 + y_2 + y_3 = 1$$

fonctions dans lesquelles :

- $P_{1,k}$ représente la puissance active calculée à partir des données de pointeur recueillies avant la k-ème commutation,
- $P_{2,k}$ représente la puissance active calculée à partir des données de pointeur recueillies après la k-ème commutation,
- $Q_{l,k}$ représente la puissance réactive calculée à partir des données de pointeur recueillies avant la k-ème commutation,
- $Q_{2,k}$ représente la puissance réactive calculée à partir des données de pointeur recueillies après la k-ème commutation,
- $u_{1,k}$ représente la tension calculée à partir des données de pointeur recueillies avant la k-ème commutation,
- $u_{2,k}$ représente la tension calculée à partir des données de pointeur recueillies après la k-ème commutation,
- $X$, $x_i$, $x_j$, $y$, $y_i$, $y_j$ sont des paramètres du modèle de charge respectif,
- YO représente une valeur limite supérieure prédéfinie.

9. Procédé conforme à l'une des revendications précédentes, selon lequel :

   - le point de travail (A') est prévu à l'aide d'un calcul de flux de charge, et/ou
   - le critère de stabilité est contrôlé à l'aide d'un calcul de flux de charge.

10. Procédé conforme à l'une des revendications précédentes, selon lequel

- le critère de stabilité est contrôlé de sorte que :

• pour l'état actuel (A) du second réseau de courant alternatif (12) on évalue une réserve de stabilité ΔP,
• pour le point de travail (A') prévu on contrôle si :

$$P_G - P' > \Delta P$$

- $P_G$ représentant la puissance active limite de la courbe caractéristique P-U,
- P' représentant la puissance active du point de travail (A'),
- la réserve de stabilité étant évaluée à l'aide d'un calcul de flux de charge, et/ou
- le critère de stabilité étant contrôlé en fonction de la dérivée première U'(P) et/ou de la valeur absolue de la dérivée première |U'(P)| et/ou de la dérivée seconde U"(P) et/ou de la valeur absolue de la dérivée seconde |U"(P)| de la courbe caractéristique P-U.

11. Procédé conforme à l'une des revendications précédentes, selon lequel :

- on contrôle un critère de variation d'état pour l'état du premier réseau de courant alternatif (11),
- si le critère de variation d'état est rempli, on réitère l'évaluation des paramètres du circuit équivalent,
- une première impédance totale qui décrit le premier réseau de courant alternatif (11) et le transformateur de régulation (12) est défini par :

$$\underline{Z} = R + jX = \frac{\underline{Z}_{Th} + \underline{Z}_{Trf}}{\ddot{u}^2}$$

dans laquelle:

- $\underline{Z}_{Th}$ représente l'impédance de Thévenin,
- $\underline{Z}_{Trf}$ représente l'impédance du transformateur de régulation (13),
- R représente la composante active de l'impédance totale,
- X représente la composante réactive de l'impédance totale,
- ZDi est un jeu de données de pointeur qui renferme les données de pointeur recueillies à un instant i,
- le critère de variation d'état étant contrôlé de sorte que :

• à partir du jeu de données de pointeur ZD1 le plus récent et des trois jeux de pointeur précédents ZD2, ZD3, ZD4 on calcule respectivement la tension $u_i$, l'intensité du courant $i_i$, la puissance active $P_i$ et la puissance réactive $Q_i$, avec i =1...4,
• on vérifie si au moins l'une des deux conditions

$$E_1^2 - 4D_1F_1 \geq 0$$

$$\Delta X < XO$$

n'est pas remplie

- les définitions suivantes étant utilisées,

$$A_1 = (u_1^2 - u_2^2)(i_1^2 - i_3^2) - (u_1^2 - u_3^2)(i_1^2 - i_2^2)$$

$$A_2 = (u_2^2 - u_3^2)(i_2^2 - i_4^2) - (u_2^2 - u_4^2)(i_2^2 - i_3^2)$$

$$B_1 = 2(P_1 - P_2)(i_1^2 - i_3^2) - 2(P_1 - P_3)(i_1^2 - i_2^2)$$

$$B_2 = 2(P_2 - P_3)(i_2^2 - i_4^2) - 2(P_2 - P_4)(i_2^2 - i_3^2)$$

$$C_1 = 2(Q_1 - Q_2)(i_1^2 - i_3^2) - 2(Q_1 - Q_3)(i_1^2 - i_2^2)$$

$$C_2 = 2(Q_2 - Q_3)(i_2^2 - i_4^2) - 2(Q_2 - Q_4)(i_2^2 - i_3^2)$$

$$D_1 = \frac{B_1^2 + C_1^2}{B_1^2}(i_1^2 - i_2^2)$$

$$D_2 = \frac{B_2^2 + C_2^2}{B_2^2}(i_2^2 - i_3^2)$$

$$E_1 = \frac{2A_1 C_1}{B_1^2}(i_1^2 - i_2^2) - 2\frac{C_1}{B_1}(P_1 - P_2) + 2(Q_1 - Q_2)$$

$$E_2 = \frac{2A_2 C_2}{B_2^2}(i_2^2 - i_3^2) - 2\frac{C_2}{B_2}(P_2 - P_3) + 2(Q_2 - Q_3)$$

$$F_1 = (u_1^2 - u_2^2) + \frac{A_1^2}{B_1^2}(i_1^2 - i_2^2) - 2\frac{A_1}{B_1}(P_1 - P_2)$$

$$F_2 = (u_2^2 - u_3^2) + \frac{A_2^2}{B_2^2}(i_2^2 - i_3^2) - 2\frac{A_2}{B_2}(P_2 - P_3)$$

dans lesquelles

- X1 représente la composante réactive de l'impédance totale pour le jeu de données de pointeur ZD1, ZD3 et est calculée à partir de la formule :

$$D_1 X_1^2 + E_1 X_1 + F_1 = 0 \quad \text{et} \quad X_1 > 0$$

- X2 représente la composante réactive de l'impédance totale pour le jeu de données de pointeur ZD2...ZD4 et est calculée à partir de la formule :

$$D_2 X_2^2 + E_2 X_2 + F_2 = 0 \quad \text{et} \quad X_2 > 0$$

- la variation relative de la composante réactive de l'impédance étant définie par la formule :

$$\Delta X = \left| \frac{(X_1 - X_2)}{X_2} \right|$$

- XO représentant une valeur limite supérieure prédéfinie.

12. Procédé conforme à l'une des revendications précédentes, selon lequel

- si le critère de stabilité n'est pas rempli on évalue la valeur de la puissance réactive nécessaire pour remplir le critère de stabilité, et on commande une installation de compensation de la puissance réactive (16) dimensionnée en conséquence qui est reliée avec le second réseau de courant alternatif.

13. Installation électrique (10) permettant de coupler deux réseaux de courant alternatif (11, 12) comprenant :

- un transformateur de régulation (13) ayant un rapport de transmission réglable qui est branché entre un premier réseau de courant alternatif et un second réseau de courant alternatif (11, 12),
- un dispositif de mesure (14) qui peut détecter des grandeurs du courant alternatif du premier réseau de courant alternatif et/ou du second réseau de courant alternatif (11, 12) sur le transformateur de régulation (13),
- un dispositif de commande (15) qui est couplé au dispositif de mesure (14) et au transformateur de régulation (13),

le dispositif de commande (15) étant réalisé pour permettre :

- d'évaluer à partir des grandeurs de courant alternatif les données de pointeur du premier réseau de courant alternatif et/ou du second réseau de courant alternatif (11, 12),
- d'évaluer pour le premier réseau de courant alternatif (11) un circuit équivalent ayant des paramètres de circuit équivalent,
- d'évaluer pour le second réseau de courant alternatif (12) un modèle de charge ayant des paramètres de modèle de charge,
- d'évaluer les paramètres de circuit équivalent et les paramètres du modèle de charges à partir des données de pointeur,
- de surveiller les données de pointeur, et en fonction du résultat de la surveillance de fournir un signal de commutation qui renferme le rapport de transmission souhaité à l'aide des données de pointeur,
- lorsque le signal de commutation est fourni :

  • de prévoir pour le rapport de transmission souhaité un point de travail (A') du second réseau de courant alternatif (12),
  • de contrôler pour le point de travail (A') prévu un critère de stabilité dans le second réseau de courant alternatif (12),
  • lorsque le critère de stabilité est rempli, de transmettre le signal de commutation au transformateur de régulation (13), et sinon pas,

- le critère de stabilité étant contrôlé de sorte que :

  • pour l'état actuel (A) du second réseau de courant alternatif (12) on évalue une réserve de stabilité $\Delta P$,
  • pour le point de travail (A') prévu on vérifie si :

$$P_G - P' > \Delta P$$

- $P_G$ représentant la puissance active limite de la courbe caractéristique P-U,
- P' représentant la puissance active du point de travail (A') prévu, en tant que réserve de stabilité

$$\Delta P = P_G - P_H$$

étant choisi,
- $P_H$ représentant la puissance active de Hopf de la courbe caractéristique P-U.

## FIG. 1

## FIG. 2

## FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1134867 B1
- GB 2521414 A
- EP 1211775 A1
- US 20130119950 A1


**In der Beschreibung aufgeführte Nicht-Patentliteratur**

- USE OF LOCAL MEASUREMENTS TO ESTIMATE VOLTAGE-STABILITY MARGIN. **VU, K. et al.** POWER INDUSTRY COMPUTER APPLICATIONS (PICA). IEEE, 12. Mai 1997
- Phasor measurement application for power system voltage stability monitoring. **LE FU et al.** POWER AND ENERGY SOCIETY GENERAL MEETING - CONVERSION AND DE-LIVERY OF ELECTRICAL ENERGY IN THE 21ST CENTURY. IEEE, 20. Juni 2008, 1-8
- Intelligent Control of On-Load Tap Chaning Transformer. **BAHADORNED MOMEN et al.** IEEE TRANSACTIONS ON SMART GRID. IEEE, 01. September 2014, vol. 5, 2255-2263
- A new method of voltage stabilty margin estimation based on local measurements. **BARTOSZ BRUSILOWICZ et al.** ADVANCED POWER SYSTEM AUTOMATION AND PROTECTION (APAP), 2011 INTERNATIONAL CONFERENCE ON. IEEE, 16. Oktober 2011, 2443-2447
- On-line monitoring of maximum permissible loading of a power system within voltage stability limits. **M.H. HAQUE.** IEE PROCEEDINGS: GENERATION, TRANSMISSION AND DISTRIBUTION. 01. Januar 2013, vol. 150, 107-112